# EUROPEAN PATENT SPECIFICATION

(11) **EP 2 421 084 B1**
(45) Date of publication and mention of the grant of the patent: **19.03.2014**
(21) Application number: 10764360.3
(22) Date of filing: 31.03.2010
(51) Int. Cl.: H01G 9/20, H01M 14/00, H01L 31/04

(54) **DYE-SENSITIZED SOLAR CELL AND DYE-SENSITIZED SOLAR CELL MODULE**
FARBSTOFFSENSIBILISIERTE SOLARZELLE UND FARBSTOFFSENSIBILISIERTES SOLARZELLENMODUL
CELLULE SOLAIRE À COLORANT ET MODULE DE CELLULE SOLAIRE À COLORANT

(30) Priority: 15.04.2009 JP 2009099238; 15.04.2009 JP 2009099239
(43) Date of publication of application: 22.02.2012
(73) Proprietor: Sharp Kabushiki Kaisha, Osaka-shi, Osaka 545-8522 (JP)
(72) Inventor: YAMANAKA, Ryohsuke, Osaka-shi, Osaka 545-8522 (JP); KOMIYA, Ryoichi, Osaka-shi, Osaka 545-8522 (JP); FUKUI, Atsushi, Osaka-shi, Osaka 545-8522 (JP); FUKE, Nobuhiro, Osaka-shi, Osaka 545-8522 (JP); KATAYAMA, Hiroyuki, Osaka-shi, Osaka 545-8522 (JP)
(74) Representative: Müller - Hoffmann & Partner
(86) International application number: PCT/JP2010/055894
(87) International publication number: WO 2010/119775

(56) References cited:
- JP-A- 2006 147 261
- JP-A- 2007 134 328
- JP-A- 2008 146 922
- JP-A- 2008 146 922
- JP-A- 2008 153 180
- JP-A- 2009 016 304
- US-A1- 2005 166 959

## Description

### TECHNICAL FIELD

The present invention relates to a dye-sensitized solar cell and a dye-sensitized solar cell module producible at a high yield by suppressing separation of a porous insulating layer or a porous semiconductor layer from a catalyst layer or a conductive layer and exerting high conversion efficiency.

### BACKGROUND ART

As an energy source in place of fossil fuel, solar cells capable of converting sun light to electric power have drawn attention. Presently, a solar cell using a crystalline silicon substrate and a thin film silicon solar cell have been used practically. However, the former has a problem of a high production cost of the silicon substrate, and the latter has a problem that the product cost is increased since various kinds of gases for semiconductor production and complicated production facilities are required. Therefore, in both solar cells, it has been tried to lower the cost per electric power output by increasing the efficiency of photoelectric conversion; however, the above-mentioned problems still remain while being unsolved.

As a new type solar cell, there has been proposed a wet type solar cell based on photo-induced electron transfer of a metal complex (see Japanese Patent No. 2664194 (Patent Document 1), for example).

This wet type solar cell has a structure formed by sandwiching a photoelectric conversion layer adsorbing a photo-sensitive dye to have an absorption spectrum in a visible light region and an electrolyte layer between electrodes of two glass substrates each of which has an electrode formed on a surface thereof. When the wet type solar cell is irradiated with light from the side of a transparent electrode, electrons are generated in the photoelectric conversion layer, the generated electrons are transferred from one electrode to the other opposed electrode through an external electric circuit, and the transferred electrons are conveyed by ions in the electrolyte and turn back to the photoelectric conversion layer. Owing to the series of the repetitive transfer of the electrons, electric energy is outputted.

However, since the basic structure of the dye-sensitized solar cell described in Patent Document 1 is a structure in which an electrolyte solution is injected between the electrodes of the two glass substrates, it is possible to produce a trial solar cell with a small surface area, but it is difficult to practically produce a solar cell with a large surface area such as 1 m square. That is, if one solar cell is enlarged in the surface area, the generated current is increased in proportion to the area. However, since a resistance decrease in the plane direction of the transparent electrode is increased, the inner electrical resistance in series of the solar cell is increased. As a result, out of current-voltage characteristics, fill-factor (FF) and a short circuit current at the time of the photoelectric conversion are lowered, resulting in a problem of decrease of the photoelectric conversion efficiency.

In order to solve the above-described problem, therefore, there has been proposed a dye-sensitized solar cell module in which a plurality of dye-sensitized solar cells are connected in series, that is, an electrode (a conductive layer) of one solar cell and an electrode (a counter electrode) of another neighboring solar cell are electrically connected (see Japanese Unexamined Patent Publication No. HEI 11(1999)-514787 (Patent Document 2); Japanese Unexamined Patent Publication No. 2001-357897 (Patent Document 3); and Japanese Unexamined Patent Publication No. 2002-367686 (Patent Document 4), for example).

Further, among Patent Documents 1 to 4, the dye-sensitized solar cell of Patent Document 4 achieves reduction in weight by decreasing the number of conductive glass plates, which are conventionally required to be two, to one. In this dye-sensitized solar cell, a porous semiconductor layer, a porous separator layer (a porous insulating layer), a catalyst layer and a conductive layer are formed on the conductive glass, and electric short circuit is suppressed by controlling the particle sizes of the porous semiconductor layer and the porous separator layer.

Further, Japanese Unexamined Patent Publication No. 2003-92417 (Patent Document 5) proposes a photoelectric conversion element including a first electrode and a second electrode, an electron transporting layer, a dye layer and a hole transporting layer provided between these electrodes, and a barrier layer for preventing or suppressing short circuit between the first electrode and the hole transporting layer, in which, in order to keep the insulation of the barrier layer, a surface of the first electrode opposed to the electron transporting layer is made smooth and a surface roughness (Rₘₐₓ of the maximum height/the maximum surface roughness defined in JIS B0601) is set to be 0.05 to 1 µm.

JP 2008 146922 A is concerned with providing a dye-sensitized solar battery capable of suppressing degradation of jointing strength under ultraviolet ray by suppressing entering of ultraviolet ray into a jointing part. To this end a photoelectric conversion element is disclosed that comprises a pair of supporters comprising a photoelectric conversion part, a jointing part for jointing a pair of supporters, and a degradation preventing means which prevents the strength of the jointing part from degrading under the ultraviolet ray entering the jointing part and the photoelectric conversion part.

US 2005/166959 A1 discloses a dye-sensitized solar cell with an improved electrode structure and enhanced energy efficiency, and a method of manufacturing same. The dye-sensitized solar cell includes a light-transmission first electrode with a first surface, and a second electrode with a second surface facing the first surface of the first electrode. The second surface of the second electrode has convexo-concave portions. A porous layer is formed on the first surface of the first electrode. A dye is absorbed into the porous layer. An electrolyte is impregnated between the first and the second electrodes.

JP 2007 134328 A is concerned with providing a solar cell which has improved photoelectric conversion efficiency. To this end a solar cell is disclosed that has a structure to obtain high efficiency and is composed of a base plate, an electrode formed on the base plate and a light absorbing layer formed on the electrode. Further, a contact face increasing part is formed between the electrode and the light absorbing layer

### PRIOR ART DOCUMENTS

### Patent Document

Patent Document 1: Japanese Patent No. 2664194
Patent Document 2: Japanese Unexamined Patent Publication No. HEI 11(1999)-514787
Patent Document 3: Japanese Unexamined Patent Publication No. 2001-357897
Patent Document 4: Japanese Unexamined Patent Publication No. 2002-367686
Patent Document 5: Japanese Unexamined Patent Publication No. 2003-92417

### DISCLOSURE OF THE INVENTION

### Problems that the Invention it to Solve

However, in the case where all of a porous semiconductor layer, a porous insulating layer, a catalyst layer and a conductive layer are laminated on a single substrate as in the dye-sensitized solar cell disclosed in Patent Document 4, there is a problem that the separation is caused in the interfaces (contact faces) of the respective layers, and it has been difficult to produce such a dye-sensitized solar cell at a high yield.

In view of the above problems, it is an object of the present invention to provide a dye-sensitized solar cell and a dye-sensitized solar cell module producible at a high yield by suppressing separation of a porous insulating layer or a porous semiconductor layer from a catalyst layer or a conductive layer and exerting high conversion efficiency.

### Means for Solving the Problems

The above described problems are solved by the subject-matter of the independent claims. Further, the inventors of the present invention have made intensive studies to solve the above-described problems and, as a result, found the following fact to complete the present invention. That is, in a dye-sensitized solar cell in which at least a catalyst layer; a porous insulating layer containing an electrolyte in the inside; a porous semiconductor layer adsorbing a sensitizing dye and containing an electrolyte in the inside; and a second conductive layer are laminated on a first conductive layer, an interface (contact face) between the porous insulating layer or the porous semiconductor layer and the catalyst layer or the second conductive layer laminated adjacent to each other is made to have an uneven form with a specified coefficient of surface roughness, so that separation in the contact face can be suppressed to produce the solar cell at an improved yield and thus the dye-sensitized solar cell with high conversion efficiency can be obtained.

Accordingly, the present invention provides a dye-sensitized solar cell comprising at least a catalyst layer; a porous insulating layer containing an electrolyte in the inside; a porous semiconductor layer adsorbing a sensitizing dye and containing an electrolyte in the inside; and a second conductive layer laminated on a first conductive layer, wherein a contact face between the porous insulating layer or the porous semiconductor layer and the catalyst layer or the second conductive layer laminated adjacent to each other has an uneven form with a surface roughness coefficient Ra in a range of 0.05 to 0.3 µm.

Further, the present invention provides a dye-sensitized solar cell module comprising two or more of the above-mentioned dye-sensitized solar cells electrically connected in series.

In the following explanation, a dye-sensitized solar cell and a dye-sensitized solar cell module may be referred to also as a solar cell and a solar cell module, respectively.

### Effects of the Invention

According to the present invention, it is possible to provide a dye-sensitized solar cell and a dye-sensitized solar cell module producible at a high yield by suppressing separation of a porous insulating layer or a porous semiconductor layer from a catalyst layer or a conductive layer and exerting high conversion efficiency.

### BRIEF DESCRIPTION OF THE DRAWINGS

FIG. 1 is a schematic cross sectional view showing a layer configuration of main parts of a solar cell (Embodiment 1-1) of the present invention.
FIG. 2 is a schematic cross sectional view showing a layer configuration of main parts of a solar cell module (Embodiment 1-2) obtained by electrically connecting in series a plurality of solar cells (Embodiment 1-1) of the present invention.
FIG. 3 is a schematic cross sectional view showing a layer configuration of main parts of a solar cell (Embodiment 2-1) of the present invention.
FIG. 4 is a schematic cross sectional view showing a layer configuration of main parts of a solar cell module (Embodiment 2-2) obtained by electrically connecting in series a plurality of solar cells (Embodiment 2-1) of the present invention.
FIG. 5 is a view showing the relation of a surface roughness coefficient and FF in each of solar cell modules of Examples 1 to 10 and Comparative Examples 1 to 6.
FIG. 6 is a schematic cross sectional view showing a layer configuration of main parts of a solar cell (Embodiment 3-1) of the present invention.
FIG. 7 is a schematic cross sectional view showing a layer configuration of main parts of a solar cell module (Embodiment 3-2) obtained by electrically connecting in series a plurality of solar cells (Embodiment 3-1) of the present invention.
FIG. 8 is a schematic cross sectional view showing a layer configuration of main parts of a solar cell (Embodiment 4-1) of the present invention.
FIG. 9 is a schematic cross sectional view showing a layer configuration of main parts of a solar cell module (Embodiment 4-2) obtained by electrically connecting in series a plurality of solar cells (Embodiment 4-1) of the present invention.

### MODES FOR CARRYING OUT THE INVENTION

A solar cell of the present invention is **characterized in that** at least a catalyst layer; a porous insulating layer containing an electrolyte in the inside; a porous semiconductor layer adsorbing a sensitizing dye and containing an electrolyte in the inside; and a second conductive layer are laminated on a first conductive layer, and a contact face between the porous insulating layer or the porous semiconductor layer and the catalyst layer or the second conductive layer laminated adjacent to each other has an uneven form with a surface roughness coefficient Ra in a range of 0.05 to 0.3 µm.

As described below, the solar cell of the present invention can be classified broadly into two embodiments, which are further classified respectively into two embodiments; that is, the solar cell of the present invention can be classified into four preferred embodiments in total.

A solar cell of the present invention is **characterized in that** at least a catalyst layer; a porous insulating layer containing an electrolyte in the inside; a porous semiconductor layer adsorbing a sensitizing dye and containing an electrolyte in the inside; and a second conductive layer are laminated on a first conductive layer, and the porous semiconductor layer and the second conductive layer are laminated adjacent to each other and a contact face between the porous semiconductor layer and the second conductive layer has an uneven form with a surface roughness coefficient Ra in a range of 0.05 to 0.3 µm.

That is, the solar cell of the present invention has a main characteristic of the state of the interface (contact face) between the porous semiconductor layer and the second conductive layer laminated adjacent to each other, and as long as the solar cell has such a characteristic, the structure is not particularly limited; however, for example, the following structure is preferable:
a structure formed by laminating at least a catalyst layer; a porous insulating layer containing an electrolyte in the inside; and a porous semiconductor layer adsorbing a sensitizing dye and containing an electrolyte in the inside in this order on a first conductive layer, and laminating a second conductive layer between the porous insulating layer and the porous semiconductor layer (Embodiment 1-1 to be described below); and
a structure formed by laminating at least a catalyst layer; a porous insulating layer containing an electrolyte in the inside; and a porous semiconductor layer adsorbing a sensitizing dye and containing an electrolyte in the inside in this order on a first conductive layer, and further laminating a second conductive layer on the porous semiconductor layer (Embodiment 2-1 to be described below).

Further, a solar cell of the present invention is **characterized in that** at least a porous semiconductor layer adsorbing a sensitizing dye and containing an electrolyte in the inside; a porous insulating layer containing an electrolyte in the inside; a second conductive layer; and a catalyst layer are laminated on a first conductive layer, and the porous insulating layer and either the second conductive layer or the catalyst layer are laminated adjacent to each other and a contact face between the porous insulating layer and the second conductive layer or the catalyst layer has an uneven form with a surface roughness coefficient Ra in a range of 0.05 to 0.3 µm.

That is, the solar cell of the present invention has a main characteristic of the state of the interface (contact face) between the porous insulating layer and either the second conductive layer or the catalyst layer laminated adjacent to each other, and as long as the solar cell has such a characteristic, the structure is not particularly limited; however, for example, the following structure is preferable:
a structure formed by laminating at least a porous semiconductor layer adsorbing a sensitizing dye and containing an electrolyte in the inside; a porous insulating layer containing an electrolyte in the inside; a second conductive layer; and a catalyst layer on a first conductive layer, and laminating the porous insulating layer; the second conductive layer; and the catalyst layer in this order (Embodiment 3-1 to be described below); and
a structure formed by laminating at least a porous semiconductor layer adsorbing a sensitizing dye and containing an electrolyte in the inside; a porous insulating layer containing an electrolyte in the inside; a second conductive layer; and a catalyst layer on a first conductive layer, and laminating the porous insulating layer; the catalyst layer; and the second conductive layer in this order (Embodiment 4-1 to be described below).

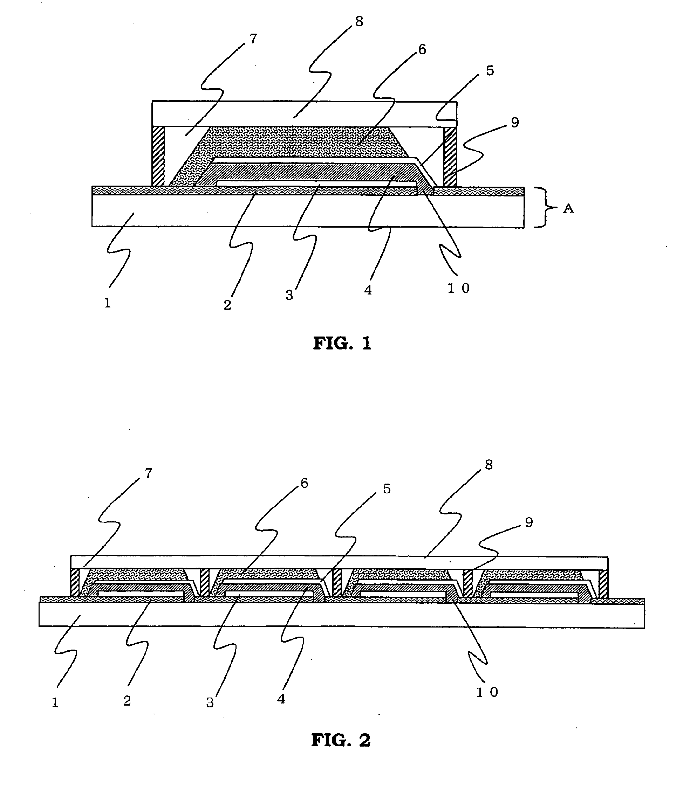

Hereinafter, the solar cells and the solar cell modules of the present invention will be described with reference to FIGs. 1 to 4 and 6 to 9 by exemplifying solar cells of Embodiments 1-1, 2-1, 3-1 and 4-1 as well as solar cell modules of Embodiments 1-2, 2-2, 3-2 and 4-2 obtained by electrically connecting two or more of the solar cells of the former Embodiments, respectively; however, the present invention should not be limited to these explanations.

In addition, in FIGs. 1 to 4 and 6 to 9, reference numeral 1 denotes a substrate; reference numeral 2 denotes a first conductive layer; reference numeral 3 denotes a catalyst layer; reference numeral 4 denotes a porous insulating layer; reference numeral 5 denotes a second conductive layer; reference numeral 6 denotes a porous semiconductor layer; reference numeral 7 denotes an electrolyte; reference numeral 8 denotes a cover member (translucent cover member, reinforced glass); reference numeral 9 denotes a sealing part (inter-cell insulating layer); and reference numeral 10 denotes a scribe line. A sensitizing dye (not illustrated) is adsorbed in the porous semiconductor layer 6, and the electrolyte 7 is contained in the porous insulating layer 4 and in the porous semiconductor layer 6.

The respective components shown in FIGs. 1 to 4 and 6 to 9 are not necessarily shown at an absolute or relative contraction ratio.

### (Embodiment 1-1)

FIG. 1 is a schematic cross sectional view showing the layer configuration of main parts of a solar cell (Embodiment 1-1) of the present invention.

This solar cell is of a type having a second conductive layer 5 formed on a porous insulating layer 4, and specifically, the solar cell is provided with a conductive substrate A obtained by forming a first conductive layer 2 on a substrate 1; a catalyst layer 3, a porous insulating layer 4, a second conductive layer 5, a porous semiconductor layer 6 adsorbing a sensitizing dye, and a translucent cover member 8 formed subsequently on the first conductive layer 2, and the porous insulating layer 4 and the porous semiconductor layer 6 each contain an electrolyte 7. Further, a sealing part 9 is formed in the outer circumferential parts between the conductive substrate A and the translucent cover member 8.

The first conductive layer 2 has a scribe line 10 formed by removing a portion of the layer in the inside region near the sealing part 9, and is divided into a portion with a larger width to be a solar cell formation region and a portion with a smaller width with respect to the scribe line 10. The portion exposed to the outside in the first conductive layer with the larger width and the portion exposed to the outside in the first conductive layer with the smaller width are connected electrically to an external circuit, respectively.

Further, the porous insulating layer 4 is formed on the catalyst layer 3 so as to stride over the scribe line 10, and the second conductive layer 5 is formed on the porous insulating layer 4 so as to stride over the first conductive layer with the smaller width. The first conductive layer with the smaller width electrically connected with the second conductive layer 5 serves as an extracting electrode of the second conductive layer 5.

In the solar cell of Embodiment 1-1, the surface of the translucent cover member 8 serves as a light receiving face, the second conductive layer 5 serves as a negative electrode, and the first conductive layer 2 serves as a positive electrode. When the light receiving face of the translucent cover member 8 is irradiated with light, electrons are generated in the porous semiconductor layer 6 and the generated electrons are transferred from the porous semiconductor layer 6 to the second conductive layer 5. The electrons are transferred from the extracting electrode to the first conductive layer 2 through an external circuit, are conveyed by ions in the electrolyte in the porous insulating layer 4 through the catalyst layer 3, and are transferred to the second conductive layer 5.

The conductive substrate A may be used as a light receiving face and in this case, a translucent material is used for the substrate 1 and the first conductive layer 2.

In the present invention, "translucent" means that the material substantially allows light to be transmitted therethrough with a wavelength to which at least the sensitizing dye to be used has effective sensitivity and thus does not necessarily need to have light in the entire wavelength region to be transmitted.

### (Substrate 1)

A material for the substrate is not particularly limited as long as it can support solar cells, and examples of such a material may include heat resistant substrates made of glass such as soda lime float glass and quartz glass; ceramics, and transparent plastic films such as polyethylene terephthalate (PET) films and polyethylene naphthalate (PEN) films, and in the case where the conductive substrate A is used as the light receiving face, a translucent material is used.

The thickness of the substrate is not particularly limited; however, it is generally approximately 0.5 to 8 mm.

### (First conductive layer 2)

The first conductive layer is not particularly limited as long as it has conductivity, and in the case where at least the conductive substrate A is used as the light receiving face, a translucent material is used.

Examples of such a material for the first conductive layer may include metal materials and metal oxide materials, which are used preferably.

The metal materials may include titanium, nickel and tantalum, which are not corrosive to an electrolyte to be described below, and these metal materials are used preferably.

The metal oxide materials may include tin oxide (SnO₂), fluorine-doped tin oxide (FTO), zinc oxide (ZnO), indium oxide (In₂O₃) and indium-tin compounded oxide (ITO), which are used preferably.

The first conductive layer 2 can be formed on the substrate 1 by a conventionally known method such as a sputtering method, a spraying method, or the like in the case of using a metal material and by a conventionally known method such as a sputtering method, a vapor deposition method, or the like in the case of using a metal oxide material.

Further, a commercialized product such as a conductive substrate obtained by laminating FTO as a transparent conductive layer on a soda lime float glass may be used as the substrate 1.

The thickness of the first conductive layer is generally approximately 0.02 to 5 µm, and it is better as the film resistance is lower and it is particularly preferable that the film resistance is 40 Ω/sq or less.

### (Catalyst layer 3)

The catalyst layer is not particularly limited as long as it can be used generally as a photoelectric conversion material in this technical field.

Examples of a material for the catalyst layer may include platinum and carbon such as carbon black, Ketjen black, carbon nanotubes and fullerene.

The catalyst layer 3 can be formed on the first conductive layer 2 by a conventionally known method such as a sputtering method, thermal decomposition of chloroplatinic acid, and electrodeposition, in the case of using, for example, platinum.

Alternatively, the catalyst layer 3 can be formed on the first conductive layer 2 by a conventionally known applying method such as a screen printing method using carbon in a paste state by dispersing carbon in a solvent or the like in the case of using carbon.

The thickness of the catalyst layer is generally, for example, approximately 0.5 to 1000 nm.

The state of the catalyst layer 3 is not particularly limited, and may be a dense film state, a porous film state or a cluster state.

### (Porous insulating layer 4)

The porous insulating layer 4 has a function of electrically insulating the catalyst layer 3 from the porous semiconductor layer 6 in Embodiments 1-1 and 2-1, and is formed on the catalyst layer 3 opposed to the non-light receiving face of the porous semiconductor layer 6.

Alternatively, the porous insulating layer 4 has a function of electrically insulating the porous semiconductor layer 6 from the second conductive layer 5 or the catalyst layer 3 in Embodiments 3-1 and 4-1 to be described below, and is formed on the non-light receiving face of the porous semiconductor layer 6.

Examples of a material for the porous insulating layer may include niobium oxide, zirconium oxide, silicon oxide (silica glass, soda glass), aluminum oxide and barium titanate, and one or more of these materials may be used selectively.

Zirconium oxide is preferably used among them. The shape is preferably granular and the average particle diameter is 100 to 500 nm, preferably 5 to 500 nm, and more preferably 10 to 300 nm.

The porous insulating layer 4 serves as a base (formation face) of the second conductive layer 5 to be described below, and the porous semiconductor layer 6 is formed further thereon.

As described above, since the electrons generated in the sensitizing dye adsorbed in the porous semiconductor layer 6 are transferred to the second conductive layer 5, the contact surface area of the porous semiconductor layer and the second conductive layer is considerably relevant to the resistance at the time of electron transfer.

Further, as described below, the second conductive layer 5 preferably has small holes for transferring the electrolyte, and accordingly, the contact surface area of the porous semiconductor layer and the second conductive layer is reduced and therefore, in order to secure a sufficient contact surface area, the film surface form of the porous insulating layer on which the second conductive layer is formed is important.

Accordingly, the inventors of the present invention have found that it is possible to provide a dye-sensitized solar cell capable of extracting a sufficient electric current value, installable outdoors, improving solar cell performance, and reducing in weight, although having a structure in which loss of the amount of incident light due to light refraction and absorption by the conductive glass substrate of the light receiving face is eliminated by defining the contact face between the porous semiconductor layer and the second conductive layer to have an even form with a surface roughness coefficient Ra in a range of 0.05 to 0.3 µm.

The idea of the present invention is thoroughly different from that of the invention described in Patent Document 5 in which the surface flatness is considered to be important.

The "surface roughness coefficient Ra" in the present invention means the arithmetical average roughness defined in JIS B0601-1994, and specifically means the average of the surface roughness values measured in 70% or more of the length in the longitudinal direction (one of sides in the case of a square) of a substrate.

### (Formation of porous insulating layer)

The porous insulating layer 4 can be formed in the same manner as that of the porous semiconductor layer 6 to be described below. More specifically, the porous insulating layer can be obtained by dispersing fine particles for formation of the porous insulating layer 4 in a proper solvent, further mixing a polymer compound such as ethyl cellulose, polyethylene glycol (PEG), or the like to obtain a paste, applying the obtained paste onto the porous semiconductor layer, drying and firing the paste.

As described above, in the solar cell of Embodiment 1-1, since the second conductive layer 5 and the porous semiconductor layer 6 are laminated in this order on the porous insulating layer 4, the surface roughness coefficient Ra of the second conductive layer 5 depends on the surface roughness coefficient Ra of the porous insulating layer 4.

Therefore, it is necessary to control the surface roughness coefficient Ra at the time of forming the porous insulating layer.

The surface roughness coefficient Ra of the porous insulating layer can be controlled by the formation method, the drying condition, leveling time, environments, and the composition of the paste.

For example, the unevenness of the surface can be made smooth by changing the leveling condition after the film formation, and the unevenness of the surface can be made smooth also by carrying out leveling for 10 to 50 minutes under a relatively high temperature condition of approximately 40°C, and depending on the conditions, the surface roughness coefficient Ra can be controlled to 0.02 µm or less. Furthermore, the unevenness of the surface can be made smooth by using a paste composition with low viscosity.

If the surface roughness coefficient Ra is within the above-mentioned range, when the second conductive layer is formed on the porous insulating layer, small holes through which the electrolyte can be transferred can be formed simultaneously with formation of the second conductive layer. However, it is not problematic if the small holes in the second conductive layer are formed separately as to be described below.

If the surface roughness coefficient Ra is less than the above-mentioned lower limit, the surface is made smooth and the contact of the porous semiconductor layer and the second conductive layer to be formed thereon is lowered, and further, no small hole for the electrolyte solution can be formed, resulting in deterioration of the performance in some cases. Further, if the surface roughness coefficient Ra exceeds the above-mentioned upper limit, the surface is so rough to form merely a fragmentary second conductive layer thereon, resulting in increase of the resistance and decrease of the performance in some cases.

### (Second conductive layer 5)

The second conductive layer is not particularly limited as long as it has conductivity, and in the case where at least the face opposed to the conductive substrate A is used as the light receiving face, a translucent material is used.

Examples of a material for the second conductive layer may include metal materials and metal oxide materials, which are used preferably.

The metal materials may include titanium, nickel, tantalum and the like, which are not corrosive to an electrolyte to be described below, and these metals are used preferably.

The metal oxide materials may include tin oxide (SnO₂), fluorine-doped tin oxide (FTO), zinc oxide (ZnO), indium oxide (In₂O₃), indium-tin compounded oxide (ITO) and the like, and these oxides are used preferably.

The second conductive layer 5 can be formed on the porous insulating layer 4 by a conventionally known method such as a sputtering method or a spraying method in the case of using a metal material, and by a conventionally known method such as a sputtering method or a vapor deposition method in the case of using a metal oxide material.

The thickness of the second conductive layer is generally approximately 0.02 to 5 µm, and it is better as the film resistance is lower. It is particularly preferable that the film resistance is 40 Q/sq or less.

In the case where the second conductive layer has a dense structure, it is preferable that the second conductive layer has a plurality of small holes for passing the electrolyte; that is, the second conductive layer has a plurality of small holes (paths for the electrolyte) which allow the electrolyte to be transferred between the porous insulating layer 4 and the porous semiconductor layer 6.

Such small holes can be formed by physical contact or laser processing.

The size of the small holes is approximately 0.1 to 100 µm and preferably approximately 1 to 50 µm, and the intervals of the neighboring small holes are approximately 1 to 200 µm and preferably approximately 10 to 300 µm.

In the case where the porous semiconductor layer is formed on the second conductive layer, the surface roughness coefficient Ra of the second conductive layer can be controlled by controlling the surface roughness coefficient Ra of the porous insulating layer, which serves as the base of the second conductive layer, so that the uneven form of the contact face of the porous semiconductor layer with the second conductive layer can be controlled.

On the other hand, in the case where the second conductive layer is formed on the porous semiconductor layer of Embodiment 2-1 to be described below, the uneven form of the contact face of the porous semiconductor layer with the second conductive layer can be controlled by controlling the surface roughness coefficient Ra of the porous semiconductor layer.

### (Porous semiconductor layer 6)

The porous semiconductor layer 6 is not particularly limited as long as it can be used generally as a photoelectric conversion material in this technical field.

Examples of a material for the porous semiconductor layer may include semiconductor compounds such as titanium oxide, zinc oxide, tin oxide, iron oxide, niobium oxide, cerium oxide, tungsten oxide, barium titanate, strontium titanate, cadmium sulfide, lead sulfide, zinc sulfide, indium phosphide, copper-indium sulfide (CuInS₂), CuAlO₂ and SrCu₂O₂, and combinations of these compounds. Among them, in terms of stability and safety, titanium oxide is particularly preferable.

Titanium oxide includes various kinds of narrowly defined titanium oxide such as anatase type titanium oxide, rutile type titanium oxide, amorphous titanium oxide, metatitanic acid, and orthotitanic acid, as well as titanium hydroxide and hydrous titanium oxide, and they may be used alone or in the form of a mixture in the present invention.

The two kinds of crystalline titanium oxide, namely, the anatase type and the rutile type can have an either state in accordance with the production method or the thermal history; however, the anatase type is common. In the present invention, crystalline titanium oxide with a high content of the anatase type, e.g., 80% or more, is particularly preferable in terms of the dye sensitization.

The state of the porous semiconductor layer may be single crystal or polycrystal; however, in terms of stability, difficulty of crystal growth, the production cost, and the like, polycrystal is preferable and the state of polycrystalline fine particles of fine powders (nanoscale to microscale) is particularly preferable.

Further, particles in two or more particle sizes of a single or different semiconductor compounds may be mixed and used. It is considered that the particles with the larger particle size contribute to the scattering of the incident light and improvement of the light trapping ratio as well as that the particles with the smaller particle size contribute to improvement of the adsorption amount of a dye due to the large (more adsorption points) specific surface area.

The ratio of the average particle diameters of the different particle sizes is preferably 10 times or more, and the average particle diameter of the particles with the larger particle size is properly approximately 100 to 500 nm, while the average particle diameter of the particles with the smaller particle size is properly approximately 5 to 50 nm. In the case of mixed particles of different semiconductor compounds, it is effective to use a semiconductor compound with strong adsorption as the particles with the smaller particle size.

The most preferable semiconductor fine particles of titanium oxide can be produced by any one of conventional methods described in various kinds of documents, such as a vapor phase method and a liquid phase method (a hydrothermal synthesis method and a sulfuric acid method). Alternatively, the semiconductor fine particles can be produced by a method of obtaining a chloride by high temperature hydrolysis developed by Degussa.

### (Formation of the porous semiconductor layer)

A method for forming the porous semiconductor layer 6 on the second conductive layer 5 (on the first conductive layer 2 in Embodiments 3-1 and 4-1 to be described below) is not particularly limited and examples thereof may be conventionally known methods. Examples may include a method of applying a suspension containing semiconductor particles onto the second conductive layer 5 and carrying out at least one of drying and firing the same.

In this method, first, semiconductor fine particles are suspended in a proper solvent to obtain a suspension. Examples to be used as such a solvent may include glyme type solvents such as ethylene glycol monoethyl ether; alcohols such as isopropyl alcohol; alcohol type mixed solvents such as isopropyl alcohol/toluene; and water. Further, in place of such a suspension, a commercialized titanium oxide paste (e.g., Ti-nanoxide D, T/SP, D/SP, manufactured by Solaronix) may be used.

Subsequently, the obtained suspension is applied onto the second conductive layer 5 by a conventionally known method such as a doctor blade method, a squeeze method, a spin coating method and a screen printing method, and is subjected to at least one of drying or firing to form the porous semiconductor layer 6.

The temperature, time, atmosphere, and the like, necessary for the drying and firing may be properly set in accordance with the material for formation of the second conductive layer 5 and the types of the semiconductor particles for formation of the porous semiconductor layer 6 and one exemplary conditions may be a temperature in a range of approximately 50 to 800°C for approximately 10 seconds to 12 hours in atmospheric air or inert gas. The drying and firing may be carried out once at a constant temperature or two or more times while changing the temperature.

The porous semiconductor layer 6 may be composed of a plurality of layers, and in this case, suspensions of different semiconductor particles are prepared, and the process of applying the suspension and carrying out at least one of drying and firing may be repeated two or more times.

The thickness of the porous semiconductor layer is not particularly limited; however, it is preferably approximately 0.1 to 100 µm. The porous semiconductor layer preferably has a large surface area, and the surface area is preferably, for example, approximately 10 to 200 m²/g.

After formation of the porous semiconductor layer 6, for the purposes of improvement of electrical connection among semiconductor fine particles, increase of the surface area of the porous semiconductor layer 6, and reduction of defect levels in the semiconductor fine particles, the porous semiconductor layer may be treated with a titanium tetrachloride aqueous solution in the case where the porous semiconductor layer is, for example, a titanium oxide film.

### (Sensitizing dye)

Examples of the sensitizing dye having a function of a photosensitizer while being adsorbed in the porous semiconductor layer 6 may include various kinds of organic dyes and metal complex dyes having absorption in a visible light region and an infrared region, and one or more kinds of these dyes may be used selectively.

Examples of the organic dyes may include azo type dyes, quinone type dyes, quinoneimine type dyes, quinacridone type dyes, squarylium type dyes, cyanine type dyes, merocyanine type dyes, triphenylmethane type dyes, xanthene type dyes, porphyrin type dyes, perylene type dyes, indigo type dyes and naphthalocyanine type dyes. The absorbance index of an organic dye is generally high as compared with that of a metal complex dye having a state of coordination bond of a molecule to a transition metal.

Examples of the metal complex dyes may include those having a state of coordination bond of metals such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te and Rh, and among them, phthalocyanine type dyes and ruthenium type dyes are preferable and ruthenium type metal complex dyes are particularly preferable.

In particular, ruthenium type metal complex dyes represented by the following formulae (1) to (3) are particularly preferable, and examples of commercialized ruthenium type metal complex dyes may include trade names; Ruthenium 535 dye, Ruthenium 535-bis TBA dye and Ruthenium 620-1H3TBA dye; all manufactured by Solaronix.

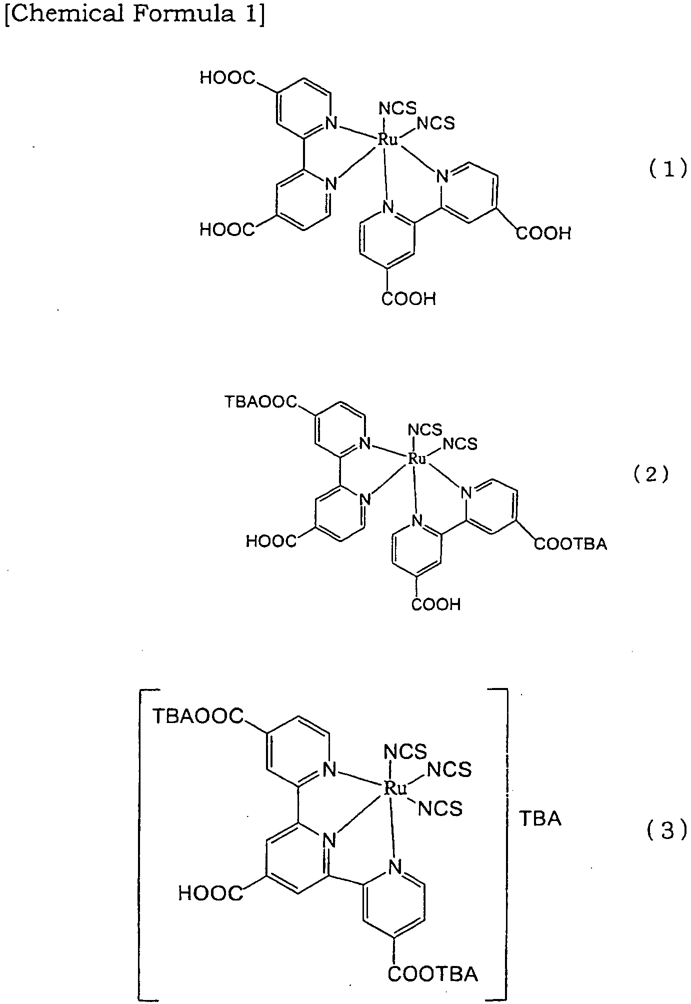

Further, in order to firmly adsorb a dye in a porous semiconductor, the dye preferably has an interlocking group such as a carboxyl group, an alkoxy group, a hydroxyl group, a sulfonic acid group, an ester group, a mercapto group or a phosphonyl group in its molecule. Generally, the interlocking group intervenes when the dye is fixed to the porous semiconductor, and provides an electric bond for making the electron transfer easy between the dye in an excited state and the conduction band of the semiconductor.

### (Dye Adsorption)

As a method for adsorbing the dye in the porous semiconductor layer 6, a representative method is, for example, in which a laminate obtained by forming the catalyst layer 3, the porous insulating layer 4, the second conductive layer 5 and the porous semiconductor layer 6 on the conductive substrate A is immersed in a solution containing the dye dissolved (a solution for dye adsorption).

Upon adsorption, the solution for dye adsorption can be heated so as to be penetrated deep inside the fine holes in the porous semiconductor layer.

The solvent to dissolve the dye therein is not particularly limited as long as it dissolves the dye, and specifically, examples thereof may include alcohol, toluene, acetonitrile, tetrahydrofuran (THF), chloroform and dimethylformamide. It is generally preferable to use a purified solvent thereof and two or more kinds may be mixed and used. The concentration of the dye in the solution for dye adsorption may be determined properly according to conditions including the dye to be used, the kind of the solvent, dye adsorption steps, and the like, and it is preferably 1 × 10⁻⁵ mol/L or more. In the preparation of the solution for dye adsorption, heating may be carried out in order to improve the solubility of the dye.

### (Electrolyte 7)

The electrolyte 7 is a liquid containing redox species, and is not particularly limited as long as it is an electrolyte generally usable for batteries and solar cells.

Examples of the redox species may include I⁻/I³⁻ type, Br²⁻/Br³⁻ type, Fe²⁺/Fe³⁺ type and quinone/hydroquinone type. Specific preferred examples thereof may include combinations of iodine (I₂) with a metal iodine such as lithium iodide (LiI), sodium iodide (NaI), potassium iodide (KI) and calcium iodide (CaI₂); combinations of iodine with a tetraalkylammonium salt such as tetraethylammonium iodide (TEAI), tetrapropylammonium iodide (TPAI), tetrabutylammonium iodide (TBAI) and tetrahexylammonium iodide (THAI); and combinations of bromine with a metal bromide such as lithium bromide (LiBr), sodium bromide (NaBr), potassium bromide (KBr) and calcium bromide (CaBr₂), and among them, the combination of LiI and I₂ is particularly preferable.

Examples of the solvent for the electrolyte may include carbonate compounds such as propylene carbonate; nitrile compounds such as acetonitrile; alcohols such as ethanol; water; and non-protonic polar substances. Among them, carbonate compounds and nitrile compounds are particularly preferable. Two or more of these solvents may be used in the form of a mixture.

If necessary, an additive may be added to the above-mentioned electrolyte.

Examples of such an additive may include nitrogen-containing aromatic compounds such as tert-butylpyridine (TBP); and imidazole salts such as dimethylpropylimidazole iodide (DMPII), methylpropylimidazole iodide (MPII), ethylmethylimidazole iodide (EMII), ethylimidazole iodide (EII) and hexylmethylimidazole iodide (HMII).

The electrolyte (redox species) concentration in the electrolyte is preferably in a range of 0.001 to 1.5 mol/L and particularly preferably in a range of 0.01 to 0.7 mol/L.

### (Cover member 8)

The cover member 8 is only required to have translucency in the case where it is formed on the light receiving face, and further to prevent leakage of the electrolyte solution in combination with the sealing part.

Examples of a material for the cover member may include reinforced glass, glass plates other than reinforced glass, transparent or opaque plastic sheets (films, laminate films), and ceramics, and in the case where solar cells are installed outdoors, reinforced glass is particularly preferable.

In the case where the transparent plastic sheet is used, the entire solar cell can be sealed by arranging two plastic sheets on the non-light receiving face of the substrate 1 and on the light receiving face of the porous semiconductor layer 6 and heat sealing the outer circumferential rims thereof, so that the sealing part to be described below is not required.

### (Sealing part 9)

The sealing part 9 has a function of preventing leakage of the electrolyte solution in the solar cell, a function of absorbing a dropping matter or the stress (impact) on a support such as the substrate 1 or the reinforced glass, and a function of absorbing sagging on the support at the time of use for a long time. As described above, in the case where the reinforced glass or other glass plate is used as the cover member 8, it is preferable to form the sealing part 8.

Further, in the case where a solar cell module is produced by connecting in series at least two or more solar cells of the present invention, the sealing part for preventing transfer of the electrolyte solution between the solar cells is important since it works as an inter-cell insulating layer.

The material for the sealing part 9 is not particularly limited as long as it can be used generally in solar cells and can exert the above-mentioned functions. Examples of such a material may include UV-curable resins and thermosetting resins, and specific examples include silicon resins, epoxy resins, polyisobutylene type resins, hot melt resins and glass frits. Two or more kinds of these materials may be used while being laminated in two or more layers.

Examples of the UV-curable resins may include model No. 31X-101 manufactured by Three Bond Co., Ltd.; examples of the thermosetting resins may include model No. 31X-088 manufactured by Three Bond Co., Ltd. and generally commercialized epoxy resins.

The pattern of the sealing part 9 can be formed by using a dispenser in the case of using a silicone resin, an epoxy resin or a glass frit, and by forming patterned holes in a hot melt resin sheet in the case of using a hot melt resin.

### (Embodiment 1-2)

FIG. 2 is a schematic cross sectional view showing the layer configuration of main parts of a solar cell module (Embodiment 1-2) obtained by electrically connecting in series a plurality of solar cells (Embodiment 1-1) of the present invention.

This solar cell module can be produced as follows.

First, a first conductive layer formed on a substrate 1 is patterned by a laser scribing method at prescribed intervals to form a plurality of scribe lines in which the conductive layer is removed. Therefore, a plurality of mutually electrically separated first conductive layers 2 are formed and solar cell formation regions are provided on the respective first conductive layers 2.

Among the plurality of the first conductive layers 2, the first conductive layer 2 at one end in the direction perpendicular to the scribe lines 10 is formed to have a smaller width, and no solar cell is formed on the first conductive layer 2 with the smaller width. This first conductive layer 2 is used as an extracting electrode of a second electrode layer 5 of a neighboring solar cell.

Next, a catalyst layer 3 is formed at a position close to the scribe line 10 on each of the first conductive layers 2, a porous insulating layer 4 is formed on the catalyst layer 3 so as to stride over the scribe line, and the second conductive layer 5 is formed on the porous insulating layer 4 so as to stride over the neighboring first conductive layer 2. In the case where the second conductive layer 5 is a dense film, a plurality of small holes are formed in the second conductive layer 5 and a porous semiconductor layer 6 is formed on the second conductive layer 5.

Subsequently, a sensitizing dye is adsorbed in the porous semiconductor layer 6 in the same manner as that in Embodiment 1-1.

After that, a sealing material is applied to the outer circumferential part of the first conductive layer 2 and between the adjacent solar cell formation regions on the first conductive layer 2, a transparent cover member 7 (e.g. reinforced glass) is placed on the sealing material and the porous semiconductor layer 6, and the sealing material is cured to form a sealing part (also inter-cell insulating layer) 9.

Thereafter, an electrolyte solution is injected into the inside through an injection hole formed previously in the substrate 1 to penetrate the insides of the porous insulating layer 4 and the porous semiconductor layer 6 with the electrolyte 7, and the injection hole is sealed with a resin to complete the solar cell module in which the plurality of solar cells are electrically connected in series.

The formation methods of the respective layers composing this solar cell module, selection of the materials, and the like are pursuant to those of Embodiment 1-1.

In the solar cell module of Embodiment 1-2, the surface of the translucent cover member 8 serves as the light receiving face, the second conductive layer 5 serves as a negative electrode, and the first conductive layer 2 serves as a positive electrode. When the light receiving face of the translucent cover member 8 is irradiated with light, electrons are generated in each porous semiconductor layer 6, the generated electrons are transferred from each porous semiconductor layer 6 to each second conductive layer 5 and are transferred from each second conductive layer 5 to each first conductive layer 2 of the neighboring solar cell, and the transferred electrons are conveyed by the ions in the electrolyte in each porous insulating layer 4 through each catalyst layer 3 and transferred to each second conductive layer 5. In FIG. 2, the first conductive layer 2 of the solar cell on the left in the direction of series connection and the extracting electrode of the solar cell on the right are electrically connected with an external circuit, so that electricity can be extracted outside.

### (Embodiment 2-1)

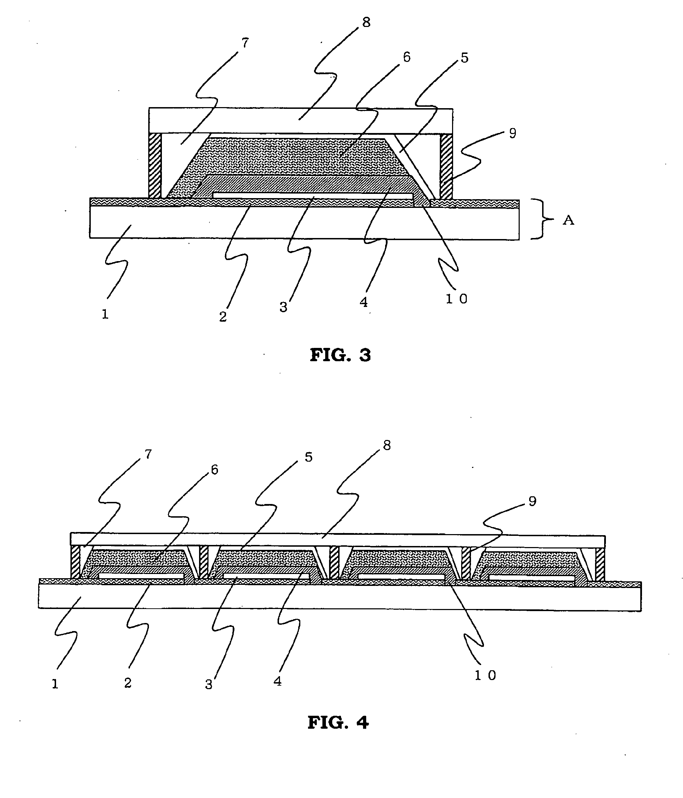

FIG. 3 is a schematic cross sectional view showing the layer configuration of main parts of a solar cell (Embodiment 2-1) of the present invention.

This solar cell is of a type in which the porous semiconductor layer 6 is formed on the porous insulating layer 4 in Embodiment 1-1 and the second conductive layer 5 is formed on the porous semiconductor layer 6, which is approximately same as that of Embodiment 1-1, except that the porous semiconductor layer 6 is formed on the porous insulating layer 4 so as to stride over the extracting electrode and that the second conductive layer 5 is formed on the porous semiconductor layer 6 so as to stride over the narrower first conductive layer 2. In this solar cell, since the second conductive layer 5 is formed on the porous semiconductor layer 6, the surface roughness coefficient Ra of the porous semiconductor layer 6 is equal to the surface roughness coefficient Ra of the interface of the porous semiconductor layer and the second conductive layer.

In this solar cell, even if there is no small hole in the second conductive layer owing to its structure, there is basically no transfer of the electrolyte (ions) and therefore, the performance will not be affected. However, at the time of producing the solar cell by penetration with the electrolyte after formation of the second conductive layer, the penetration with the electrolyte solution is deteriorated if there is no small hole in the second conductive layer and the penetration of the porous semiconductor layer and the porous insulating layer thereunder with the electrolyte solution is often insufficient, which results in the problem of deterioration of the performance of the solar cell. Therefore, even in this solar cell, the second conductive layer preferably has small holes.

A method for producing the solar cell of Embodiment 2-1 is basically pursuant to the production method of Embodiment 1-1.

### (Embodiment 2-2)

FIG. 4 is a schematic cross sectional view showing the layer configuration of main parts of a solar cell module (Embodiment 2-2) obtained by electrically connecting in series a plurality of solar cells (Embodiment 2-1) of the present invention.

The method for producing the solar cell module is same as the production method of Embodiment 1-2, except that the production orders of the porous semiconductor layer 6 and the second conductive layer 5 in the solar cell module of Embodiment 1-2 were exchanged.

### (Embodiment 3-1)

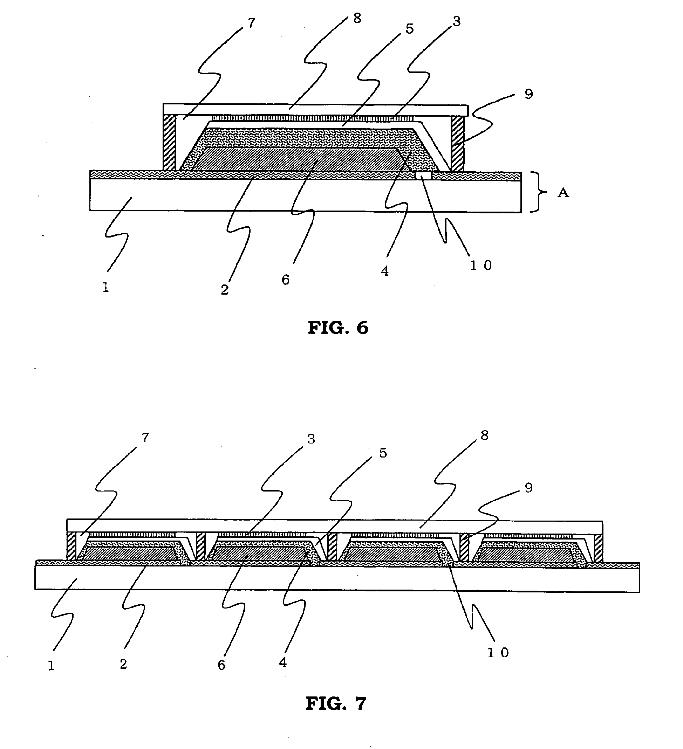

FIG. 6 is a schematic cross sectional view showing the layer configuration of main parts of a solar cell (Embodiment 3-1) of the present invention.

The solar cell is of a type in which a porous insulating layer, a second conductive layer and a catalyst layer are laminated in this order, and specifically has a conductive substrate A obtained by forming a first conductive layer 2 on a substrate 1, a porous semiconductor layer adsorbing a sensitizing dye and containing an electrolyte in the inside, a porous insulating layer containing an electrolyte in the inside, a second conductive layer, and a catalyst layer subsequently formed on the first conductive layer 2. Further, a sealing part 9 is formed at the outer circumferential part between the conductive substrate A and a cover member 8.

The first conductive layer 2 has a scribe line 10 formed by removing a portion thereof in the inside region near the sealing part 9 and is divided by the scribe line 10 into a portion with a larger width to serve as a solar cell formation region and a portion with a smaller width. The portion exposed to the outside in the first conductive layer with the larger width and the portion exposed to the outside in the first conductive layer with the smaller width are connected electrically to an external circuit, respectively.

Further, the porous insulating layer 4 is formed so as to stride over the scribe line 10, and the second conductive layer 5 is formed on the porous insulating layer 4 so as to stride over the first conductive layer with the smaller width. The first conductive layer with the smaller width electrically connected with the second conductive layer 5 serves as an extracting electrode of the second conductive layer 5.

In the solar cell of Embodiment 3-1, the surface of the substrate 1 serves as the light receiving face, the first conductive layer 2 serves as a negative electrode, and the second conductive layer 5 serves as a positive electrode. When the light receiving face of the substrate 1 is irradiated with light, electrons are generated in the porous semiconductor layer 6, the generated electrons are transferred from the porous semiconductor layer 6 to the first conductive layer 2, are transferred from the extracting electrode to the second conductive layer 5 through an external circuit, are conveyed by ions in the electrolyte in the porous insulating layer 4 to be transferred to the first conductive layer 2.

Components and a method for producing the solar cell are basically pursuant to those of Embodiment 1-1; however, particular characteristics are described below.

The porous insulating layer 4 serves as a base (formation face) of the second conductive layer 5, and a catalyst layer 3 is formed further thereon.

As described above, the second conductive layer 5 is required to firmly bond to (contact with) the porous insulating layer 4 and smoothly transfer the ions between the porous semiconductor layer 6 and the catalyst layer 3 through the porous insulating layer 4 and the second conductive layer 5. For these purposes, it is required to secure a sufficient contact surface area as well as to have small holes for smoothly transfer the ions. In order to form the second conductive layer 5 satisfying these requirements, the film surface from of the porous insulating layer to serve as the base thereof is important.

Accordingly, the inventors of the present invention have found that it is possible to provide a dye-sensitized solar cell producible at a high yield with suppressed separation of the catalyst layer and the conductive layer and exerting high conversion efficiency by defining the contact face between the porous insulating layer and the second conductive layer or the catalyst layer to have an even form with a surface roughness coefficient Ra in a range of 0.05 to 0.3 µm.

The idea of the present invention is thoroughly different from that of the invention described in Patent Document 5 in which the surface flatness is considered to be important.

As described above, in the solar cell of Embodiment 3-1, since the porous insulating layer 4, the second conductive layer 5 and the catalyst layer 3 are formed in this order on the porous semiconductor layer 6, the surface roughness coefficient Ra of the second conductive layer 5 depends on the surface roughness coefficient Ra of the porous insulating layer 4.

Therefore, it is necessary to control the surface roughness coefficient Ra of the porous insulating layer at the time of formation thereof and a control method is pursuant to that of Embodiment 1-1.

Since the second conductive layer 5 is only required to transfer electrons to the catalyst layer 3 and to receive them therefrom, existence of small holes in the second conductive layer 5 will not affect the performance in terms of the structure of the solar cell. However, since immersion in a dye solution or penetration with an electrolyte solution are carried out after formation of the second conductive layer in the process of producing the solar cell, penetration with the dye solution and the electrolyte solution is promoted if there are such small holes in the second conductive layer and adsorption of the dye in the porous semiconductor layer and penetration of the porous semiconductor layer and the porous insulating layer with the electrolyte solution are improved.

Therefore, in the case where the second conductive layer has a dense structure, the second conductive layer preferably has a plurality of small holes for passing the dye and the electrolyte, and the formation method thereof is pursuant to that of Embodiment 1-1.

In the case of forming the second conductive layer on the porous insulating layer, the uneven form of the contact face of the porous insulating layer with the second conductive layer can be controlled by controlling the surface roughness coefficient Ra of the porous insulating layer to serve as a base.

On the other hand, in the case of forming the catalyst layer on the porous insulating layer as in Embodiment 4-1 to be described below, the uneven form of the contact face of the porous insulating layer with the catalyst layer can be controlled similarly by controlling the surface roughness coefficient Ra of the porous insulating layer.

### (Embodiment 3-2)

FIG. 7 is a schematic cross sectional view showing the layer configuration of main parts of a solar cell module (Embodiment 3-2) obtained by electrically connecting in series a plurality of solar cells (Embodiment 3-1) of the present invention.

The solar cell module can be produced as follows.

First, a first conductive layer formed on a substrate 1 is patterned by a laser scribing method at prescribed intervals to form a plurality of scribe lines in which the conductive layer is removed. Therefore, a plurality of mutually electrically separated first conductive layers 2 are formed and solar cell formation regions are provided on the respective first conductive layers 2.

Among the plurality of the first conductive layers 2, the first conductive layer 2 at one end in the direction perpendicular to the scribe line 10 is formed to have a smaller width and no solar cell is formed on the first conductive layer 2 with the smaller width, so that this first conductive layer 2 is used as an extracting electrode of a second conductive layer 5 of a neighboring solar cell.

Next, a porous semiconductor layer 6 is formed at a position close to the scribe line 10 on each first conductive layers 2 and a porous insulating layer 4 is formed on the porous semiconductor layer 6 so as to stride over the scribe line, the second conductive layer 5 is formed on the porous insulating layer 4 so as to stride over the neighboring first conductive layer 2. In the case where the second conductive layer 5 is a dense film, a plurality of small holes are formed in the second conductive layer 5 and a catalyst layer 3 is formed on the second conductive layer.

Subsequently, a sensitizing dye is adsorbed in the porous semiconductor layer 6 in the same manner as that in Embodiment 3-1.

After that, a sealing material is applied to the outer circumferential part of the first conductive layer 2 and between the adjacent solar cell formation regions on the first conductive layer 2, a transparent cover member 8 is placed on the sealing material and the porous semiconductor layer 6, and the sealing material is cured to form a sealing part (also inter-cell insulating layer) 9.

Thereafter, an electrolyte solution is injected into the inside through an injection hole formed previously in the substrate 1 to penetrate the insides of the porous insulating layer 4 and the porous semiconductor layer 6 with the electrolyte 7, and the injection hole is sealed with a resin to complete the solar cell module in which the plurality of solar cells are electrically connected in series.

The formation methods of the respective layers composing this solar cell module, selection of the materials, and the like are pursuant to those of Embodiment 3-1.

### (Embodiment 4-1)

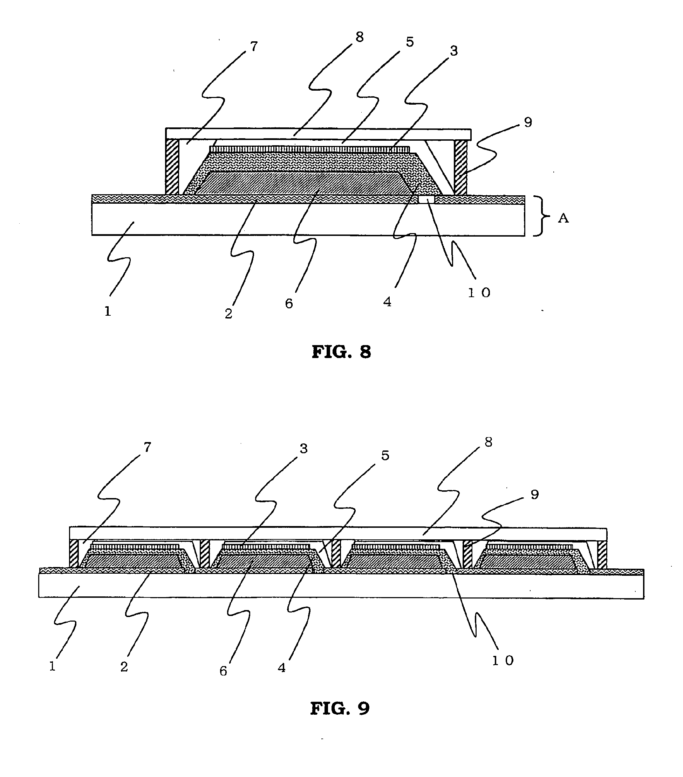

FIG. 8 is a schematic cross sectional view showing the layer configuration of main parts of a solar cell (Embodiment 4-1) of the present invention.

This solar cell is of a type in which the catalyst layer and the second conductive layer are laminated in this order on the porous insulating layer 4 of Embodiment 3-1, and is approximately same as that of Embodiment 1-1 except that the second conductive layer 5 is formed on the catalyst layer 3. In this solar cell, since the catalyst layer 3 is formed on the porous insulating layer 4, the surface roughness coefficient Ra of the porous insulating layer 4 is equal to the surface roughness coefficient Ra of the contact face of the porous insulating layer with the catalyst layer.

In this solar cell, even if there is no small hole in the second conductive layer owing to its structure, there is basically no transfer of the electrolyte (ions), and therefore, the performance will not be affected. However, at the time of producing the solar cell by penetration with the electrolyte after formation of the second conductive layer, the penetration with the electrolyte solution is deteriorated if there is no small hole in the second conductive layer and the penetration of the porous semiconductor layer and the porous insulating layer thereunder with the electrolyte solution is often insufficient, which results in a problem of deterioration of the performance of the solar cell. Therefore, even in this solar cell, the second conductive layer preferably has small holes.

A method for producing the solar cell of Embodiment 4-1 is basically pursuant to the production method of Embodiment 3-1.

### (Embodiment 4-2)

FIG. 9 is a schematic cross sectional view showing the layer configuration of main parts of a solar cell module (Embodiment 4-2) obtained by electrically connecting in series a plurality of solar cells (Embodiment 4-1) of the present invention.

The method for producing the solar cell module is same as the production method of Embodiment 3-2, except that the production orders of the second conductive layer 5 and the catalyst layer 3 in the solar cell module of Embodiment 3-2 were exchanged.

### Examples.

The present invention will be described further specifically with reference to Examples and Comparative Examples; however, the present invention should not be limited to these Examples.

The thickness and the surface roughness coefficient Ra of each layer in Examples and Comparative Examples were measured by a surface roughness measurement apparatus (model type: Surfcom 1400A, manufactured by TOKYO SEIMITSU CO., LTD.) unless otherwise specified.

### (Example 1-1)

A solar cell module shown in FIG. 2 was produced.

A conductive glass substrate of 70 mm x 70 mm x 4 mm in thickness obtained by forming a first conductive layer 2 of a SnO₂ film on a substrate 1 made of glass (SnO₂ film-bearing glass, produced by Nippon Sheet Glass Co., Ltd.) was prepared.

### <Cutting of first conductive layer>

Using a YAG laser (basic wavelength: 1.06 µm, manufactured by Seishin Trading Co., Ltd.), the first conductive layer 2 was irradiated with a laser beam to evaporate the SnO₂ film to form six scribe lines 10 with a width of 0. 1 mm at an interval of 6 mm.

### <Formation of catalyst layer>

Using a screen printing apparatus (model type: LS-34TVA, manufactured by Newlong Seimitsu Kogyo Co., Ltd.) and a screen printing plate (seven aperture parts of 5 mm x 50 mm), a catalyst formation material (trade name: Pt-Catalyst T/SP, produced by Solaronix) was applied onto the conductive glass substrate and the obtained coating was fired at 450°C for one hour to form clustered catalyst layers 3.

### <Formation of porous insulating layer>

A paste was prepared by dispersing 65 parts by weight of fine particles of zirconium oxide (particle diameter; 100 nm, produced by C.I. Kasei Co., Ltd.) in 30 parts by weight of terpineol and mixing further with 5 parts by weight of ethyl cellulose.

Using a screen printing apparatus (model type: LS-34TVA, manufactured by Newlong Seimitsu Kogyo Co., Ltd.) and a screen printing plate (seven aperture parts of 6 mm x 54 mm), the obtained paste was applied onto the catalyst layers 3 and was leveled at 25°C for 30 minutes.

Next, the obtained coating was preliminarily dried at 80°C for 20 minutes and was fired at 450°C for one hour to obtain a porous insulating layer (a zirconium oxide film) 4 having a film thickness of 5 µm and a surface roughness coefficient Ra of 0.050 µm.

### <Formation of second conductive layer>

A film of titanium was formed at a deposition rate of 5 Å/S on the porous insulating layer 4 by using an electron beam vapor-deposition apparatus (model type: ei-5, manufactured by ULVAC, Inc.) and a metal mask (seven aperture parts of 6.2 mm x 52 mm) to form a second conductive layer 5 with a film thickness of approximately 500 nm and a surface roughness coefficient Ra of 0.051 µm.

### <Formation of porous semiconductor layer>

Using a screen printing apparatus (model type: LS-34TVA, manufactured by Newlong Seimitsu Kogyo Co., Ltd.) and a screen printing plate (seven aperture parts of 5 mm x 50 mm), a commercialized titanium oxide paste (trade name: Ti-Nanoxide D/SP, average particle diameter: 13 nm, produced by Solaronix) was applied onto the second conductive layer 5 and was leveled at 25°C for 15 minutes.

Next, the obtained coating was preliminarily dried at 80°C for 20 minutes and then fired at 450°C for one hour, and this process was repeated five times to form a porous semiconductor layer (a titanium oxide film) 6 having the total film thickness of 30 µm and a surface roughness coefficient Ra of the outermost layer of 0.051 µm.

### <Adsorption of sensitizing dye>

A solution for dye adsorption was obtained by dissolving a sensitizing dye (trade name: Ruthenium 620-1H3TBA, produced by Solaronix) so as to have a concentration of 4×10⁻⁴ mol/L, in a mixed solvent of acetonitrile (produced by Aldrich Chemical Company) and tert-butyl alcohol (produced by Aldrich Chemical Company) at a volume ratio of 1 : 1.

The laminate obtained in the above-mentioned process was immersed in the solution for dye adsorption under a temperature condition of 40°C for 20 hours to adsorb the sensitizing dye in the porous semiconductor layer 6. Thereafter, the laminate was washed with ethanol (produced by Aldrich Chemical Company) and was dried at approximately 80°C for approximately 10 minutes.

### <Preparation of electrolyte>

As a redox species, LiI (produced by Aldrich Chemical Company) and I₂ (produced by Tokyo Kasei Kogyo Co., Ltd.) were added so as to have concentrations of 0.1 mol/L and 0.01 mol/L, respectively, in acetonitrile serving as a solvent, and further as additives, tert-butylpyridine (TBP, produced by Aldrich Chemical Company) and dimethylpropylimidazole iodide (DMPII, produced by Shikoku Chemicals Corporation) were added so as to have concentrations of 0.5 mol/L and 0.6 mol/L, respectively, which were dissolved to obtain an electrolyte.

### <Formation of sealing part and injection of electrolyte>

A UV-curable material (model No. 31X-101 manufactured by Three Bond Co., Ltd.) was applied to the circumferential part and between the solar cell formation regions on the first conductive layer 2, and a reinforced glass substrate 8 of 50 mm x 70 mm x 4.0 mm in thickness prepared separately (manufactured by Asahi Glass Co., Ltd.) was bonded to the substrate 1. A hole for electrolyte injection was previously formed in the substrate 1. Next, using an UV irradiation lamp (model type: Novacure, manufactured by EFD Corporation), the coated parts were irradiated with ultraviolet rays to cure the UV-curing material to form a sealing part 9 as well as to fix the two substrates 1 and 8.

Next, the electrolyte was injected through the hole for electrolyte injection in the substrate 1 and the hole for electrolyte injection was sealed with a resin to complete a solar cell module corresponding to that shown in FIG. 2.

Various solar cell characteristics were measured by irradiating the obtained solar cell module with light having an intensity of 1 kW/m² (AM 1.5 solar simulator).

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

### (Examples 1-2 to 1-5)

Solar cell modules shown in FIG. 2 were produced in the same manner as that of Example 1-1, except that the leveling time after the application of the paste for porous insulating layer was changed to 0 seconds, 20 seconds, 2 minutes and 5 minutes in formation of the porous insulating layer 4 and the various solar cell characteristics thereof were measured.

The surface roughness coefficient Ra of the porous insulating layer was changed to 0.190 µm, 0.147 µm, 0.099 µm and 0.055 µm, and the surface roughness coefficient Ra of the second conductive layer was changed accordingly to 0.198 µm, 0.150 µm, 0.101 µm and 0.053 µm, respectively.

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

### (Comparative Example 1-1)

A solar cell module shown in FIG. 2 was produced in the same manner as that of Example 1-1, except that leveling was carried out at 35°C for 10 minutes after the application of the paste for porous insulating layer in formation of the porous insulating layer 4, and the various solar cell characteristics thereof were measured.

The surface roughness coefficient Ra of the porous insulating layer was changed to 0.043 µm, and the surface roughness coefficient of the second conductive layer was changed accordingly to 0.043 µm.

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

### (Comparative Example 1-2)

A solar cell module shown in FIG. 2 was produced in the same manner as that of Example 1-1, except that the a paste was prepared by dispersing 60 parts by weight of fine particles of zirconium oxide (particle diameter; 100 nm, produced by C.I. Kasei Co., Ltd.) in 35 parts by weight of terpineol and mixing further with 5 parts by weight of ethyl cellulose in formation of the porous insulating layer 4, as well as that the leveling time after the application of the paste for porous insulating layer was changed to 10 minutes, and the various solar cell characteristics thereof were measured.

The surface roughness coefficient Ra of the porous insulating layer was changed to 0.036 µm, and the surface roughness coefficient of the second conductive layer was changed accordingly to 0.033 µm.

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

### (Comparative Example 1-3)

A solar cell module shown in FIG. 2 was produced in the same manner as that of Example 1-1, except that the a paste was prepared by dispersing 60 parts by weight of fine particles of zirconium oxide (particle diameter; 100 nm, produced by C.I. Kasei Co., Ltd.) in 35 parts by weight of terpineol and mixing further with 5 parts by weight of ethyl cellulose (same as Comparative Example 1-2) in formation of the porous insulating layer 4, as well as that leveling was carried out at 35°C for 10 minutes after the application of the paste for porous insulating layer (same as Comparative Example 1-1), and the various solar cell characteristics thereof were measured.

The surface roughness coefficient Ra of the porous insulating layer was changed to 0.026 µm, and the surface roughness coefficient of the second conductive layer was changed accordingly to 0.020 µm.

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

### (Comparative Example 1-4)

A solar cell module shown in FIG. 2 was produced in the same manner as that of Example 1-1, except that a conductive glass substrate with the same size (SnO₂ film-bearing glass substrate, produced by Nippon Sheet Glass Co., Ltd.) was used in place of the reinforced glass substrate 8 (same as Patent Document 5) and that that leveling was carried out at 35°C for 10 minutes after the application of the paste for porous insulating layer in formation of the porous insulating layer 4 (same as Comparative Example 1-1), and the various solar cell characteristics thereof were measured.

The surface roughness coefficient Ra of the porous insulating layer was changed to 0.043 µm, and the surface roughness coefficient of the second conductive layer was changed accordingly to 0.043 µm.

Further, ten solar cell modules were produced in the same manner and occurrence of separation of the porous semiconductor layer and the second conductive layer was observed with eyes at the time of production.

The obtained results are shown together with the surface roughness coefficients Ra of the second conductive layer and the porous insulating layer in Table 1.

**[Table 1]**

| | Second conductive layer (Porous insulating layer) Surface roughness coefficients (µm) | Short-circuit current J_{SC} (mA/cm²) | Open circuit voltage Voc (V) | Fill Factor F. F | Conversion efficiency (%) | Occurrence of separation (in ten) (pieces) |
|---|---|---|---|---|---|---|
| Example 1-1 | 0.051 (0.050) | 2.00 | 4.90 | 0.63 | 6.17 | 0 |
| Example 1-2 | 0.198 (0.190) | 1.97 | 4.92 | 0.67 | 6.49 | 0 |
| Example 1-3 | 0.150 (0.147) | 2.03 | 4.97 | 0.68 | 6.86 | 0 |
| Example 1-4 | 0.101 (0.099) | 2.08 | 4.98 | 0.65 | 6.73 | 0 |
| Example 1-5 | 0.053 (0.055) | 2.12 | 4.91 | 0.64 | 6.67 | 0 |
| Comparative Example 1-1 | 0.043 (0.043) | 2.00 | 4.89 | 0.59 | 5.77 | 3 |
| Comparative Example 1-2 | 0.033 (0.036) | 1.98 | 4.92 | 0.58 | 5.65 | 5 |
| Comparative Example 1-3 | 0.020 (0.026) | 1.98 | 4.98 | 0.55 | 5.42 | 5 |
| Comparative Example 1-4 | 0.043 (0.043) | 1.71 | 4.97 | 0.59 | 5.02 | 4 |

### (Example 1-6)

A solar cell module shown in FIG. 4 was produced in the same manner as that of Example 1-1, except that the formation orders of the second conductive layer 5 and the porous semiconductor layer 6 were exchanged, and the various solar cell characteristics thereof were measured.

The surface roughness coefficient Ra of the porous semiconductor layer was 0.051 µm.

Further, ten solar cell modules were produced in the same manner and occurrence of separation of the porous semiconductor layer and the second conductive layer was observed with eyes at the time of production.

The obtained results are shown together with the surface roughness coefficient Ra of the porous insulating layer in Table 2.

### (Examples 1-7 to 1-10)

Solar cell modules shown in FIG. 4 were produced in the same manner as that of Example 1-6, except that the leveling time after the application of the paste for porous semiconductor layer was changed to 0 seconds, 30 seconds, 2 minutes and 5 minutes in formation of the porous semiconductor layer 6, and the various solar cell characteristics thereof were measured.

The surface roughness coefficient Ra of the porous semiconductor layer was changed to 0.240 µm, 0.170 µm, 0.104 µm and 0.086 µm.

Further, ten solar cell modules were produced in the same manner and occurrence of separation of the porous semiconductor layer and the second conductive layer was observed with eyes at the time of production.

The obtained results are shown together with the surface roughness coefficients Ra of the porous semiconductor layer in Table 2.

### (Comparative Example 1-5)

A solar cell module shown in FIG. 4 was produced in the same manner as that of Example 1-6, except that leveling was carried out at 30°C for 10 minutes after the application of the paste for porous semiconductor layer in formation of the porous semiconductor layer 6, and the various solar cell characteristics thereof were measured.

The surface roughness coefficient Ra of the porous semiconductor layer was 0.040 µm.

Further, ten solar cell modules were produced in the same manner and occurrence of separation of the porous semiconductor layer and the second conductive layer was observed with eyes at the time of production.

The obtained results are shown together with the surface roughness coefficient Ra of the porous semiconductor layer in Table 2.

### (Comparative Example 1-6)

A solar cell module shown in FIG. 4 was produced in the same manner as that of Example 1-6, except that leveling was carried out at 35°C for 10 minutes after the application of the paste for porous semiconductor layer in formation of the porous semiconductor layer 6, and the various solar cell characteristics thereof were measured.

The surface roughness coefficient Ra of the porous semiconductor layer was 0.030 µm.

Further, ten solar cell modules were produced in the same manner and occurrence of separation of the porous semiconductor layer and the second conductive layer was observed with eyes at the time of production.

The obtained results are shown together with the surface roughness coefficient Ra of the porous semiconductor layer in Table 2.

### (Comparative Example 1-7)

A solar cell module shown in FIG. 4 was produced in the same manner as that of Example 1-6, except that leveling was carried out at 40°C for 10 minutes after the application of the paste for porous semiconductor layer in formation of the porous semiconductor layer 6, and the various solar cell characteristics thereof were measured.

The surface roughness coefficient Ra of the porous semiconductor layer was 0.031 µm.

Further, ten solar cell modules were produced in the same manner and occurrence of separation of the porous semiconductor layer and the second conductive layer was observed with eyes at the time of production.

The obtained results are shown together with the surface roughness coefficient Ra of the porous semiconductor layer in Table 2.

**[Table 2]**

| | Porous semiconductor layer Surface roughness coefficients (µm) | Short-circuit current J_{SC} (mA/cm²) | Open circuit voltage Voc (V) | Fill Factor F. F | Conversion efficiency (%) | Occurrence of separation (in ten) (pieces) |
|---|---|---|---|---|---|---|
| Example 1-6 | 0.051 | 1.84 | 4.99 | 0.69 | 6.34 | 0 |
| Example 1-7 | 0.240 | 1.85 | 4.96 | 0.67 | 6.15 | 0 |
| Example 1-8 | 0.170 | 1.89 | 4.97 | 0.68 | 6.39 | 0 |
| Example 1-9 | 0.104 | 1.90 | 4.93 | 0.66 | 6.18 | 0 |
| Example 1-10 | 0.086 | 1.91 | 4.90 | 0.64 | 6.00 | 0 |
| Comparative Example 1-5 | 0.040 | 1.88 | 4.89 | 0.60 | 5.52 | 2 |
| Comparative Example 1-6 | 0.030 | 1.89 | 4.91 | 0.59 | 5.48 | 3 |
| Comparative Example 1-7 | 0.031 | 1.90 | 4.91 | 0.58 | 5.41 | 4 |

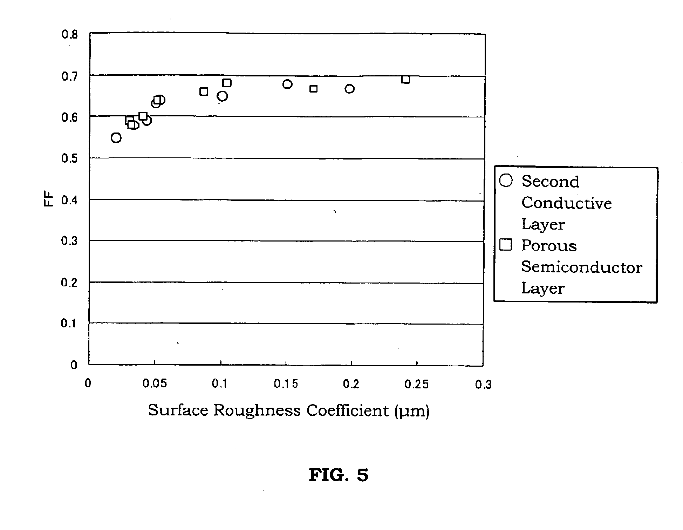

FIG. 5 shows the relations of the surface roughness coefficient and FF of the solar cell modules of Examples 1-1 to 1-5 and Comparative Examples 1-1 to 1-4, as well as of the solar cell modules of Examples 1-5 to 1-10 and Comparative Examples 1-5 to 1-7.

In the figure, "o" shows the results of the former; that is, points of the surface roughness coefficient of the second conductive layer and FF, and "□" shows the results of the latter; that is, points of the surface roughness coefficient of the porous semiconductor layer and FF.

According to FIG. 5, there is a flexion point of FF near the surface roughness coefficient of 0.05 µm, which implies that as the surface roughness coefficient of the contact face between the porous semiconductor layer and the second conductive layer is increased, the contact surface area of the electron transfer interface is increased and the resistance is reduced.

In general, in the case where a laminate is formed, in order to keep the contact state of respective layers constant and stably form the layers, the surface of the layer to be laminated is made flat. Contrarily, in the present invention, it was found out that a solar cell can be produced stably with the improved performance by roughening the surface of a layer to be laminated to a certain extent.

### (Example 2-1)

A solar cell module shown in FIG. 7 was produced.

A conductive glass substrate of 70 mm × 70 mm × 4 mm in thickness obtained by forming a first conductive layer 2 made of a Sn0₂ film on a substrate 1 made of glass (SnO₂ film-bearing glass substrate, produced by Nippon Sheet Glass Co., Ltd.) was prepared.

### <Cutting of first conductive layer>

Using a YAG laser (basic wavelength: 1.06 µm, manufactured by Seishin Trading Co., Ltd.), the first conductive layer 2 was irradiated with a laser beam to evaporate the SnO₂ film to form six scribe lines 10 with a width of 0. 1 mm at an interval of 6 mm.

### <Formation of porous semiconductor layer>

Using a screen printing apparatus (model type: LS-34TVA, manufactured by Newlong Seimitsu Kogyo Co., Ltd.) and a screen printing plate (seven aperture parts of 5 mm × 50 mm), a commercialized titanium oxide paste (trade name: Ti-Nanoxide D/SP, average particle diameter: 13 nm, produced by Solaronix) was applied onto the first conductive layer 2 and was leveled at 25°C for 15 minutes.

Next, the obtained coating was preliminarily dried at 80°C for 20 minutes and then fired at 450°C for one hour, and this process was repeated 5 times to form a porous semiconductor layer (a titanium oxide film) 6 having the total film thickness of 30 µm and a surface roughness coefficient Ra of the outermost layer of 0.051 µm.

### <Formation of porous insulating layer>

A paste was prepared by dispersing 65 parts by weight of fine particles of zirconium oxide (particle diameter; 100 nm, produced by C.I. Kasei Co., Ltd.) in 30 parts by weight of terpineol and mixing further with 5 parts by weight of ethyl cellulose.

Using a screen printing apparatus (model type: LS-34TVA, manufactured by Newlong Seimitsu Kogyo Co., Ltd.) and a screen printing plate (seven aperture parts of 6 mm × 54 mm), the obtained paste was applied onto the porous semiconductor layer 6 and was leveled at 25°C for 30 minutes.

Next, the obtained coating was preliminarily dried at 80°C for 20 minutes and was fired at 450°C for one hour to obtain a porous insulating layer (a zirconium oxide film) 4 having a film thickness of 5 µm and a surface roughness coefficient Ra of 0.050 µm.

### <Formation of second conductive layer>

A film of titanium was formed at a deposition rate of 5 Å/S on the porous insulating layer 4 by using an electron beam vapor-deposition apparatus (model type: ei-5, manufactured by ULVAC, Inc.) and a metal mask (seven aperture parts of 5.8 mm × 52 mm) to form a second conductive layer 5 with a film thickness of approximately 500 nm.

### <Formation of catalyst layer>

Using a screen printing apparatus (model type: LS-34TVA, manufactured by Newlong Seimitsu Kogyo Co., Ltd.) and a screen printing plate (seven aperture parts of 5 mm × 50 mm), a catalyst formation material (trade name: Pt-Catalyst T/SP, produced by Solaronix) was applied onto the second conductive layer 5 and the obtained coating was fired at 450°C f or one hour to form a catalyst layer 3.

### <Adsorption of sensitizing dye>

A solution for dye adsorption was obtained by dissolving a sensitizing dye (trade name: Ruthenium 620-1H3TBA, produced by Solaronix) so as to have a concentration of 4 × 10⁻⁴ mol/ L in a mixed solvent of acetonitrile (produced by Aldrich Chemical Company) and tert-butyl alcohol (produced by Aldrich Chemical Company) at a volume ratio of 1 : 1.

A laminate obtained in the above-mentioned process was immersed in the solution for dye adsorption under a temperature condition of 40°C for 20 hours to adsorb the sensitizing dye in the porous semiconductor layer 6. Thereafter, the laminate was washed with ethanol (produced by Aldrich Chemical Company) and was dried at approximately 80°C for approximately 10 minutes.

### <Preparation of electrolyte>

As a redox species, LiI (produced by Aldrich Chemical Company) and I₂ (produced by Tokyo Kasei Kogyo Co., Ltd.) were added so as to have concentrations of 0.1 mol/L and 0.01 mol/L, respectively, in acetonitrile as a solvent, and further as additives, tert-butylpyridine (TBP, produced by Aldrich Chemical Company) and dimethylpropylimidazole iodide (DMPII, produced by Shikoku Chemicals Corporation) were added so as to have concentrations of 0.5 mol/L and 0.6 mol/L, respectively, which were dissolved to obtain an electrolyte.

### <Formation of sealing part and injection of electrolyte>

A UV-curable material (model No. 31X-101 manufactured by Three Bond Co., Ltd.) was applied to the circumferential part and between the solar cell formation regions on the first conductive layer 2, and a cover member 8 made of soda lime glass of 50 mm × 70 mm × 1 mm in thickness prepared separately was bonded to the substrate 1. A hole for electrolyte injection was previously formed in the cover member 8. Next, using an UV irradiation lamp (model type: Novacure, manufactured by EFD Corporation), the coated part was irradiated with .ultraviolet rays to cure the UV-curing material and to form a sealing part 9 as well as to fix the two substrates 1 and 8.

Next, the electrolyte was injected through the hole for electrolyte injection in the cover member 8, and the hole for electrolyte injection was sealed with a resin to complete a solar cell module corresponding to that shown in FIG. 7.

Various solar cell characteristics were measured by irradiating the obtained solar cell module with light having an intensity of 1 kW/m² (AM 1.5 solar simulator).

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 3.

### (Examples 2-2 to 2-5)

Solar cell modules shown in FIG. 7 were produced in the same manner as that of Example 2-1, except that the leveling time after the application of the paste for porous insulating layer was changed to 0 seconds, 20 seconds, 2 minutes and 5 minutes in formation of the porous insulating layer 4, and the various solar cell characteristics thereof were measured.

The surface roughness coefficient Ra of the porous insulating layer was changed to 0.190 µm, 0.147 µm, 0.099 µm and 0.055 µm.

Further, ten solar cell modules were produced in the same manner and occurrence of separation of the second conductive layer and the catalyst layer was observed with eyes at the time of production.

The obtained results are shown together with the surface roughness coefficients Ra of the porous insulating layer in Table 3.

### (Example 2-6)

A solar cell module with a structure as shown in FIG. 7 was produced in the same manner as that of Example 2-1, except that a paste obtained by dispersing 65 parts by weight of fine particles of zirconium oxide in 28 parts by weight of terpineol and further mixing with 7 parts by weight of ethyl cellulose was used in formation of the porous insulating layer 4 and that leveling was carried out at 30°C for 3 minutes after screen printing, and the various solar cell characteristics thereof were measured.

The surface roughness coefficient Ra of the porous insulating layer was changed to 0.300 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 3.

### (Comparative Example 2-1)

A solar cell module shown in FIG. 7 was produced in the same manner as that of Example 2-1, except that leveling was carried out at 30°C for 10 minutes after the application of the paste for porous insulating layer in formation of the porous insulating layer 4, and the various solar cell characteristics thereof were measured.

The surface roughness coefficient Ra of the porous insulating layer was changed to 0.043 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 3.

### (Comparative Example 2-2)

A solar cell module shown in FIG. 7 was produced in the same manner as that of Example 2-1, except that leveling was carried out at 35°C for 10 minutes after the application of the paste for porous insulating layer in formation of the porous insulating layer 4, and the various solar cell characteristics thereof were measured.

The surface roughness coefficient Ra of the porous insulating layer was changed to 0.036 um.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 3.

### (Comparative Example 2-3)

A solar cell module shown in FIG. 7 was produced in the same manner as that of Example 2-1, except that leveling was carried out at 25°C for 10 minutes after the application of the paste for porous insulating layer in formation of the porous insulating layer 4, and the various solar cell characteristics thereof were measured.

The surface roughness coefficient Ra of the porous insulating layer was changed to 0.320 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 3.

**[Table 3]**

| | Porous insulating layer Surface roughness coefficients (µm) | Short-circuit current J_{SC} (mA/cm²) | Open circuit voltage Voc (V) | Fill Factor F. F | Conversion efficiency (%) | Occurrence of separation (in ten) (pieces) |
|---|---|---|---|---|---|---|
| Example 2-1 | 0.050 | 1.97 | 4.91 | 0.62 | 6.00 | 0 |
| Example 2-2 | 0.190 | 1.98 | 4.93 | 0.65 | 6.34 | 0 |
| Example 2-3 | 0.147 | 2.02 | 4.94 | 0.66 | 6.59 | 0 |
| Example 2-4 | 0.099 | 2.05 | 4.95 | 0.63 | 6.39 | 0 |
| Example 2-5 | 0.055 | 1.99 | 4.92 | 0.62 | 6.07 | 0 |
| Example 2-6 | 0.300 | 1.99 | 4.91 | 0.62 | 6.05 | 0 |
| Comparative Example 2-1 | 0.043 | 1.98 | 4.90 | 0.61 | 5.91 | 3 |
| Comparative Example 2-2 | 0.036 | 1.96 | 4.92 | 0.61 | 5.88 | 5 |
| Comparative Example 2-3 | 0.320 | 1.97 | 4.91 | 0.55 | 5.32 | 0 |

### (Example 2-7)

A solar cell module shown in FIG. 9 was produced in the same manner as that of Example 2-1, except that the formation orders of the second conductive layer 5 and the catalyst layer 3 were exchanged, and the various solar cell characteristics thereof were measured.

The surface roughness coefficient Ra of the porous semiconductor layer was 0.050 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 4.

### (Examples 2-8 to 2-11)

Solar cell modules shown in FIG. 9 were produced in the same manner as that of Example 2-7, except that the leveling time after the application of the paste for porous semiconductor layer was changed to 0 seconds, 20 seconds, 2 minutes and 5 minutes in formation of the porous insulating layer 4, and the various solar cell characteristics thereof were measured.

The surface roughness coefficient Ra of the porous semiconductor layer was changed to 0.190 µm, 0.147 µm, 0.099 µm and 0.055 µm.

Further, ten solar cell modules were produced in the same manner and occurrence of separation of the second conductive layer and the catalyst layer was observed with eyes at the time of production.

The obtained results are shown together with the surface roughness coefficients Ra of the porous insulating layer in Table 4.

### (Example 2-12)

A solar cell module with a structure as shown in FIG. 9 was produced in the same manner as that of Example 2-7, except that a paste obtained by dispersing 65 parts by weight of fine particles of zirconium oxide in 28 parts by weight of terpineol and further mixing with 7 parts by weight of ethyl cellulose was used in formation of the porous insulating layer 4 and that leveling was carried out at 30°C for 3 minutes after screen printing, and the various solar cell characteristics thereof were measured.

The surface roughness coefficient Ra of the porous insulating layer was changed to 0.300 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 4.

### (Comparative Example 2-4)

A solar cell module shown in FIG. 9 was produced in the same manner as that of Example 2-7, except that leveling was carried out at 30°C for 10 minutes after the application of the paste for porous insulating layer in formation of the porous insulating layer 4, and the various solar cell characteristics thereof were measured.

The surface roughness coefficient Ra of the porous insulating layer was changed to 0.043 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 4.

### (Comparative Example 2-5)

A solar cell module shown in FIG. 9 was produced in the same manner as that of Example 2-7, except that leveling was carried out at 35°C for 10 minutes after the application of the paste for porous insulating layer in formation of the porous insulating layer 4, and the various solar cell characteristics thereof were measured.

The surface roughness coefficient Ra of the porous insulating layer was changed to 0.036 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 4.

### (Comparative Example 2-6)

A solar cell module shown in FIG. 9 was produced in the same manner as that of Example 2-7, except that leveling was carried out at 25°C for 10 minutes after the application of the paste for porous insulating layer in formation of the porous insulating layer 4, and the various solar cell characteristics thereof were measured.

The surface roughness coefficient Ra of the porous insulating layer was changed to 0.320 µm.

Further, ten solar cell modules were produced in the same manner and occurrence of separation of the second conductive layer and the catalyst layer was observed with eyes at the time of production.

The obtained results are shown together with the surface roughness coefficient Ra of the porous insulating layer in Table 4.

**[Table 4]**

| | Porous insulating layer Surface roughness coefficients (µm) | Short-circuit current J_{SC} (mA/cm²) | Open circuit voltage Voc (V) | Fill Factor F. F | Conversion efficiency (%) | Occurrence of separation (in ten) (pieces) |
|---|---|---|---|---|---|---|
| Example 2-7 | 0.050 | 1.98 | 4.91 | 0.63 | 6.12 | 0 |
| Example 2-8 | 0.190 | 1.98 | 4.93 | 0.67 | 6.54 | 0 |
| Example 2-9 | 0.147 | 2.03 | 4.94 | 0.68 | 6.82 | 0 |
| Example 2-10 | 0.099 | 2.06 | 4.93 | 0.64 | 6.50 | 0 |
| Example 2-11 | 0.055 | 2.01 | 4.93 | 0.63 | 6.24 | 0 |
| Example 2-12 | 0.300 | 2.00 | 4.91 | 0.63 | 6.18 | 0 |
| Comparative Example 2-4 | 0.043 | 2.00 | 4.90 | 0.61 | 5.98 | 2 |
| Comparative Example 2-5 | 0.036 | 1.98 | 4.92 | 0.61 | 5.93 | 5 |
| Comparative Example 2-6 | 0.320 | 1.98 | 4.91 | 0.56 | 5.46 | 0 |

According to the results of Table 3 and Table 4, it can be understood that a solar cell module having an uneven form of the contact face between the porous insulating layer and the second conductive layer or the catalyst layer with a surface roughness coefficient Ra in a range of 0.05 to 0.3 µm exerts high conversion efficiency, and has no separation of the catalyst layer and the conductive layer, and is producible at a high yield.

### DESCRIPTION OF THE REFERENCE NUMERALS

- 1.: Substrate
- 2: First conductive layer
- 3.: Catalyst layer
- 4.: Porous insulating layer
- 5.: Second conductive layer
- 6.: Porous semiconductor layer
- 7.: Electrolyte
- 8.: Cover member (translucent cover member, reinforced glass)
- 9.: Sealing part (inter-cell insulating layer)
- 10: Scribe line
- A.: Conductive substrate

## Claims

1. A dye-sensitized solar cell comprising at least
a catalyst layer (3);
a porous insulating layer (4) containing an electrolyte (7) in the inside;
a porous semiconductor layer (6) adsorbing a sensitizing dye and containing an electrolyte (7) in the inside; and
a second conductive layer (5) laminated on a first conductive layer (2), wherein
the dye-sensitized solar cell has
a structure formed by laminating at least a catalyst layer (3); a porous insulating layer (4) containing an electrolyte (7) in the inside; and a porous semiconductor layer (6) adsorbing a sensitizing dye and containing an electrolyte (7) in the inside in this order on a first conductive layer (2), and laminating a second conductive layer (5) between the porous insulating layer and the porous semiconductor layer;
a structure formed by laminating at least a catalyst layer (3); a porous insulating layer (4) containing an electrolyte (7) in the inside; and a porous semiconductor layer (6) adsorbing a sensitizing dye and containing an electrolyte (7) in the inside in this order on a first conductive layer (2), and further laminating a second conductive layer (5) on the porous semiconductor layer;
a structure formed by laminating at least a porous semiconductor layer (6) adsorbing a sensitizing dye and containing an electrolyte (7) in the inside; a porous insulating layer (4) containing an electrolyte (7) in the inside; a second conductive layer (5); and a catalyst layer (3) on a first conductive layer (2), and laminating the porous insulating layer (4); the second conductive layer (5); and the catalyst layer (3) in this order; or
a structure formed by laminating at least a porous semiconductor layer (6) adsorbing a sensitizing dye and containing an electrolyte (7) in the inside; a porous insulating layer (4) containing an electrolyte (7) in the inside; a second conductive layer (5); and a catalyst layer (3) on a first conductive layer, and laminating the porous insulating layer (4); the catalyst layer (3); and the second conductive layer (5) in this order;
**characterized in that**
a contact face between the porous insulating layer (4) or the porous semiconductor layer (6) and the catalyst layer (3) or the second conductive layer (5) laminated adjacent to each other has an uneven form with a surface roughness coefficient Ra in a range of 0.05 to 0.3 µm.

2. The dye-sensitized solar cell according to claim 1, wherein at least a catalyst layer (3); a porous insulating layer (4) containing an electrolyte (7) in the inside; a porous semiconductor layer (6) adsorbing a sensitzing dye and containing an electrolyte (7) in the inside; and a second conductive layer (5) are laminated on a first conductive layer (2), and the porous semiconductor layer (6) and the second conductive layer (5) are laminated adjacent to each other and a contact face between the porous semiconductor layer (6) and the second conductive layer (5) has an uneven form with a surface roughness coefficient Ra in a range of 0.05 to 0.3 µm.

3. The dye-sensitized solar cell according to claim 2, wherein at least a catalyst layer (3); a porous insulating layer (4) containing an electrolyte (7) in the inside; and a porous semiconductor layer (6) adsorbing a sensitizing dye and containing an electrolyte (7) in the inside are laminated on a first conductive layer (2) in this order, and the second conductive layer (5) is laminated between the porous insulating layer (4) and the porous semiconductor layer (6).

4. The dye-sensitized solar cell according to claim 2, wherein at least a catalyst layer (3); a porous insulating layer (4) containing an electrolyte (7) in the inside; and a porous semiconductor layer (6) adsorbing a sensitizing dye and containing an electrolyte (7) in the inside are laminated on a first conductive layer (2) in this order, and further a second conductive layer (5) is laminated on the porous semiconductor layer (6).

5. The dye-sensitized solar cell according to claim 1, wherein at least a porous semiconductor layer (6) adsorbing a sensitizing dye and containing an electrolyte (7) in the inside; a porous insulating layer (4) containing an electrolyte (7) in the inside; a second conductive layer (5); and a catalyst layer (3) are laminated on a first conductive layer (2), and the porous insulating layer (4) and either the second conductive layer (5) or the catalyst layer (3) are laminated adjacent to each other and a contact face between the porous insulating layer (4) and the second conductive layer (5) or the catalyst layer (3) has an uneven form with a surface roughness coefficient Ra in a range of 0.05 to 0.3 µm.

6. The dye-sensitized solar cell according to claim 5, wherein at least a porous semiconductor layer (6) adsorbing a sensitizing dye and containing an electrolyte (7) in the inside; a porous insulating layer (4) containing an electrolyte in the inside; a second conductive layer (5); and a catalyst layer (3) are laminated on a first conductive layer (2), and the porous insulating layer (4); the second conductive layer (5); and the catalyst layer (3) are laminated in this order.

7. The dye-sensitized solar cell according to claim 5, wherein at least a porous semiconductor layer (6) adsorbing a sensitizing dye and containing an electrolyte (7). in the inside; a porous insulating layer (4) containing an electrolyte (7) in the inside; an second conductive layer (5); and a catalyst layer (3) are laminated on a first conductive layer (2), and the porous insulating layer (4); the catalyst layer (3); and the second conductive layer (5) are laminated in this order.

8. The dye-sensitized solar cell according to claim 1, wherein the first conductive layer (2) and the second conductive layer (5) are made of metal material or metal oxide material.

9. The dye-sensitized solar cell according to claim 8, wherein the metal material is titanium, nickel and tantalum.

10. The dye-sensitized solar cell according to claim 8, wherein the metal oxide material is tin oxide, fluorine-doped tin oxide, zinc oxide, indium oxide or indiumtin compounded oxide.

11. The dye-sensitized solar cell according to claim 1, wherein the second conductive layer (5) has a plurality of small holes for passing the electrolyte (7); or the dye and the electrolyte.

12. A dye-sensitized solar cell module comprising two or more of the dye-sensitized solar cells according to claim 1 electrically connected in series.

## Patentansprüche

1. Farbstoffsolarzelle,
welche zumindest aufweist:
eine Katalysatorschicht (3),
eine poröse Isolationsschicht (4), welche im Inneren einen Elektrolyten (7) aufweist,
eine poröse Halbleiterschicht (6), welche einen empfindlich machenden Farbstoff adsorbiert und welche im Inneren einen Elektrolyten (7) aufweist, und
eine zweite leitfähige Schicht (5), welche auf einer ersten leitfähigen Schicht (2) geschichtet ist,
wobei die Farbstoffsolarzelle aufweist:
eine Struktur, die gebildet wird durch Schichten mindestens einer Katalysatorschicht (3), einer porösen Isolationsschicht (4), welche im Inneren einen Elektrolyten (7) aufweist, und einer porösen Halbleiterschicht (6), welche einen empfindlich machenden Farbstoff adsorbiert und welche im Inneren einen Elektrolyten (7) aufweist, in dieser Reihenfolge auf einer ersten leitfähigen Schicht (2) und durch Schichten einer zweiten leitfähigen Schicht (5) zwischen der porösen Isolationsschicht und der porösen Halbleiterschicht,
eine Struktur, die gebildet wird durch Schichten mindestens einer Katalysatorschicht (3), einer porösen Isolationsschicht (4), welche im Inneren einen Elektrolyten (7) aufweist, und einer porösen Halbleiterschicht (6), welche einen empfindlich machenden Farbstoff adsorbiert und welche im Inneren einen Elektrolyten (7) aufweist, in dieser Reihenfolge auf einer ersten leitfähigen Schicht (2) und weiter durch Schichten einer zweiten leitfähigen Schicht (5) auf der porösen Halbleiterschicht,
eine Struktur, die ausgebildet wird durch Schichten mindestens einer porösen Halbleiterschicht (6), welche einen empfindlich machenden Farbstoff adsorbiert und welche im Inneren einen Elektrolyten (7) aufweist, einer porösen Isolationsschicht (4), welche im Inneren einen Elektrolyten (7) aufweist, einer zweiten leitfähigen Schicht (5) und einer Katalysatorschicht (3) auf einer ersten leitfähigen Schicht (2) und durch Schichten der porösen Isolationsschicht (4), der zweiten leitfähigen Schicht (5) und der Katalysatorschicht (3) in dieser Reihenfolge oder
eine Struktur, die ausgebildet wird durch Schichten mindestens einer porösen Halbleiterschicht (6), welche einen empfindlich machenden Farbstoff adsorbiert und welche im Inneren einen Elektrolyten (7) enthält, einer porösen Isolationsschicht (4), welche im Inneren einen Elektrolyten (7) enthält, einer zweiten leitfähigen Schicht (5) und einer Katalysatorschicht (3) auf einer ersten leitfähigen Schicht (2) und durch Schichten der porösen Isolationsschicht (4), der Katalysatorschicht (3) und der zweiten leitfähigen Schicht (5) in dieser Reihenfolge,
**dadurch gekennzeichnet,**
**dass** die Kontaktfläche zwischen der porösen Isolationsschicht (4) oder der porösen Halbleiterschicht (6) und der Katalysatorschicht (3) oder der zweiten leitfähigen Schicht (5), die zueinander benachbart geschichtet sind, eine unebene Gestalt mit einem Oberflächenrauhigkeitskoeffizienten Ra im Bereich von 0,05 bis 0,3 µm aufweist.

2. Farbstoffsolarzelle nach Anspruch 1,
wobei mindestens eine Katalysatorschicht (3), eine poröse Isolationsschicht (4), welche im Inneren einen Elektrolyten (7) aufweist, eine poröse Halbleiterschicht (6), welche einen empfindlich machenden Farbstoff adsorbiert und welche im Inneren einen Elektrolyten (7) aufweist, und eine zweite leitfähige Schicht (5) auf einer ersten leitfähigen Schicht (2) geschichtet sind,
wobei die poröse Halbleiterschicht (6) und die zweite leitfähige Schicht (5) benachbart zueinander geschichtet sind und
wobei eine Kontaktfläche zwischen der porösen Halbleiterschicht (6) und der zweiten leitfähigen Schicht (5) eine unebene Form mit einem Oberflächenrauhigkeitskoeffizienten RA im Bereich von 0,05 bis 0,3 µm aufweist.

3. Farbstoffsolarzelle nach Anspruch 2,
wobei mindestens eine Katalysatorschicht (3), eine poröse Isolationsschicht (4), welche im Inneren einen Elektrolyten (7) aufweist, und eine poröse Halbleiterschicht (6), welche einen empfindlich machenden Farbstoff adsorbiert und welche im Inneren einen Elektrolyten (7) aufweist, in dieser Reihenfolge auf einer ersten leitfähigen Schicht (2) und
wobei die zweite leitfähige Schicht (5) zwischen der porösen Isolationsschicht und der porösen Halbleiterschicht (6) geschichtet ist.

4. Farbstoffsolarzelle nach Anspruch 2,
wobei mindestens eine Katalysatorschicht (3), eine poröse Isolationsschicht (4), welche im Inneren einen Elektrolyten (7) aufweist, und eine poröse Halbleiterschicht (6), welche einen empfindlich machenden Farbstoff adsorbiert und welche im Inneren einen Elektrolyten (7) aufweist, in dieser Reihenfolge auf einer ersten leitfähigen Schicht (2) geschichtet sind und
wobei weiter eine zweite leitfähige Schicht (5) auf der porösen Halbleiterschicht (6) geschichtet ist.

5. Farbstoffsolarzelle nach Anspruch 1,
wobei mindestens eine poröse Halbleiterschicht (6), welche einen empfindlich machenden Farbstoff adsorbiert und welche im Inneren einen Elektrolyten (7) aufweist, eine poröse Isolationsschicht (4), welche im Inneren einen Elektrolyten (7) aufweist, eine zweite leitfähige Schicht (5) und eine Katalysatorschicht (3) auf einer ersten leitfähigen Schicht (2) geschichtet sind und
wobei die poröse Isolationsschicht (4) und die zweite leitfähige Schicht (5) oder die Katalysatorschicht (3) zueinander benachbart geschichtet sind und
wobei eine Kontaktfläche zwischen der porösen Isolationsschicht (4) und der zweiten leitfähigen Schicht (5) oder der Katalysatorschicht (3) eine unebene Gestalt mit einem Oberflächenrauhigkeitskoeffizienten Ra im Bereich von 0,05 bis 0,3 µm aufweist.

6. Farbstoffsolarzelle nach Anspruch 5,
wobei mindestens eine poröse Halbleiterschicht (6), welche einen empfindlich machenden Farbstoff adsorbiert und welche im Inneren einen Elektrolyten (7) aufweist, eine poröse Isolationsschicht (4), welche im Inneren einen Elektrolyten (7) aufweist, eine zweite leitfähige Schicht (5) und eine Katalysatorschicht (3) auf einer ersten leitfähigen Schicht (2) geschichtet sind und
wobei die poröse Isolationsschicht (4), die zweite leitfähige Schicht (5) und die Katalysatorschicht (3) in dieser Reihenfolge geschichtet sind.

7. Farbstoffsolarzelle nach Anspruch 5,
wobei mindestens eine poröse Halbleiterschicht (6), welche einen empfindlich machenden Farbstoff adsorbiert und welche im Inneren einen Elektrolyten (7) enthält, eine poröse Isolationsschicht (4), welche im Inneren einen Elektrolyten (7) enthält, eine zweite leitfähige Schicht (5) und eine Katalysatorschicht (3) auf einer ersten leitfähigen Schicht (2) geschichtet sind und
wobei die poröse Isolationsschicht (4), die Katalysatorschicht (3) und die zweite leitfähige Schicht (5) in dieser Reihenfolge geschichtet sind.

8. Farbstoffsolarzelle nach Anspruch 1,
wobei die erste leitfähige Schicht (2) und die zweite leitfähige Schicht (5) aus einem Metallmaterial oder einem Metalloxidmaterial gebildet sind.

9. Farbstoffsolarzelle nach Anspruch 8,
wobei das Metallmaterial Titan, Nickel und Tantal ist.

10. Farbstoffsolarzelle nach Anspruch 8,
wobei das Metalloxidmaterial ein Zinnoxid, ein mit Fluor dotiertes Zinnoxid, Zinkoxid, Indiumoxid oder Indiumzinnverbindungsoxid ist.

11. Farbstoffsolarzelle nach Anspruch 1,
wobei die zweite leitfähige Schicht (5) eine Mehrzahl kleiner Löcher zum Passieren des Elektrolyten (7) oder des Farbstoffs und des Elektrolyten aufweist.

12. Farbstoffsolarzellenmodul mit zwei oder mehr Farbstoffsolarzellen nach Anspruch 1, die elektrisch miteinander in Reihe verbunden sind.

## Revendications

1. Cellule solaire à colorant comprenant au moins une couche catalytique (3) ;
une couche isolante poreuse (4) qui contient un électrolyte (7) à l'intérieur ;
une couche semi-conductrice poreuse (6) qui adsorbe un colorant sensibilisant et qui contient un électrolyte (7) à l'intérieur ; et
une seconde couche conductrice (5) qui est appliquée par stratification sur une première couche conductrice (2),
étant précisé que la cellule solaire à colorant a
une structure qui est formée par application par stratification d'au moins une couche catalytique (3) ; d'une couche isolante poreuse (4) qui contient un électrolyte (7) à l'intérieur ; et d'une couche semi-conductrice poreuse (6) qui adsorbe un colorant sensibilisant et qui contient un électrolyte (7) à l'intérieur, dans cet ordre sur une première couche conductrice (2), et par application par stratification d'une seconde couche conductrice (5) entre la couche isolante poreuse et la couche semi-conductrice poreuse ;
une structure qui est formée par application par stratification d'au moins une couche catalytique (3) ; d'une couche isolante poreuse (4) qui contient un électrolyte (7) à l'intérieur ; et d'une couche semi-conductrice poreuse (6) qui adsorbe un colorant sensibilisant et qui contient un électrolyte (7) à l'intérieur, dans cet ordre sur une première couche conductrice (2), et également par application par stratification d'une seconde couche conductrice (5) sur la couche semi-conductrice poreuse ;
une structure qui est formée par application par stratification d'au moins une couche semi-conductrice poreuse (6) qui adsorbe un colorant sensibilisant et qui contient un électrolyte (7) à l'intérieur ; d'une couche isolante poreuse (4) qui contient un électrolyte (7) à l'intérieur ; d'une seconde couche conductrice (5) ; et d'une couche catalytique (3) sur une première couche conductrice (2), et par application par stratification de la couche isolante poreuse (4) ; de la seconde couche conductrice (5) ; et de la couche catalytique (3) dans cet ordre ; ou
une structure qui est formée par application par stratification d'au moins une couche semi-conductrice poreuse (6) qui adsorbe un colorant sensibilisant et qui contient un électrolyte (7) à l'intérieur ; d'une couche isolante poreuse (4) qui contient un électrolyte (7) à l'intérieur ; d'une seconde couche conductrice (5) ; et d'une couche catalytique (3) sur une première couche conductrice, et par application par stratification de la couche isolante poreuse (4) ; de la couche catalytique (3) ; et de la seconde couche conductrice (5) dans cet ordre ;
**caractérisée en ce qu'**une face de contact entre la couche isolante poreuse (4) ou la couche semi-conductrice poreuse (6) et la couche catalytique (3) ou la seconde couche conductrice (5) appliquées par stratification les unes à côté des autres a une forme inégale avec un coefficient de rugosité de surface Ra situé dans une plage de 0,05 à 0,3 µm.

2. Cellule solaire à colorant selon la revendication 1, étant précisé qu'au moins une couche catalytique (3) ; une couche isolante poreuse (4) qui contient un électrolyte (7) à l'intérieur ; une couche semi-conductrice poreuse (6) qui adsorbe un colorant sensibilisant et qui contient un électrolyte (7) à l'intérieur, et une seconde couche conductrice (5) sont appliquées par stratification sur une première couche conductrice (2), et que la couche semi-conductrice poreuse (6) et la seconde couche conductrice (5) sont appliquées par stratification l'une à côté de l'autre et qu'une face de contact entre la couche semi-conductrice poreuse (6) et la seconde couche conductrice (5) a une forme inégale, avec un coefficient de rugosité de surface Ra situé dans une plage de 0,05 à 0,3 µm.

3. Cellule solaire à colorant selon la revendication 2, étant précisé qu'au moins une couche catalytique (3) ; une couche isolante poreuse (4) qui contient un électrolyte (7) à l'intérieur ; et une couche semi-conductrice poreuse (6) qui adsorbe un colorant sensibilisant et qui contient un électrolyte (7) à l'intérieur, sont appliquées par stratification sur une première couche conductrice (2) dans cet ordre, et que la seconde couche conductrice (5) est appliquée par stratification entre la couche isolante poreuse (4) et la couche semi-conductrice poreuse (6).

4. Cellule solaire à colorant selon la revendication 2, étant précisé qu'au moins une couche catalytique (3) ; une couche isolante poreuse (4) qui contient un électrolyte (7) à l'intérieur ; et une couche semi-conductrice poreuse (6) qui adsorbe un colorant sensibilisant et qui contient un électrolyte (7) à l'intérieur, sont appliquées par stratification sur une première couche conductrice (2) dans cet ordre, et également qu'une seconde couche conductrice (5) est appliquée par stratification sur la couche semi-conductrice poreuse (6).

5. Cellule solaire à colorant selon la revendication 1, étant précisé qu'au moins une couche semi-conductrice poreuse (6) qui adsorbe un colorant sensibilisant et qui contient un électrolyte (7) à l'intérieur ; une couche isolante poreuse (4) qui contient un électrolyte (7) à l'intérieur ; une seconde couche conductrice (5) ; et une couche catalytique (3) sont appliquées par stratification sur une première couche conductrice (2), et que la couche isolante poreuse (4) et soit la seconde couche conductrice (5), soit la couche catalytique (3) sont appliquées par stratification l'une à côté de l'autre et qu'une face de contact entre la couche isolante poreuse (4) et la seconde couche conductrice (5) ou la couche catalytique (3) a une forme inégale, avec un coefficient de rugosité de surface Ra situé dans une plage de 0,05 à 0,3 µm.

6. Cellule solaire à colorant selon la revendication 5, étant précisé qu'au moins une couche semi-conductrice poreuse (6) qui adsorbe un colorant sensibilisant et qui contient un électrolyte (7) à l'intérieur ; une couche isolante poreuse (4) qui contient un électrolyte (7) à l'intérieur ; une seconde couche conductrice (5) ; et une couche catalytique (3) sont appliquées par stratification sur une première couche conductrice (2), et que la couche isolante poreuse (4) ; la seconde couche conductrice (5) ; et la couche catalytique (3) sont appliquées par stratification dans cet ordre.

7. Cellule solaire à colorant selon la revendication 5, étant précisé qu'au moins une couche semi-conductrice poreuse (6) qui adsorbe un colorant sensibilisant et qui contient un électrolyte (7) à l'intérieur ; une couche isolante poreuse (4) qui contient un électrolyte (7) à l'intérieur ; une seconde couche conductrice (5) ; et une couche catalytique (3) sont appliquées par stratification sur une première couche conductrice (2), et que la couche isolante poreuse (4) ; la couche catalytique (3) ; et la seconde couche conductrice (5) sont appliquées par stratification dans cet ordre.

8. Cellule solaire à colorant selon la revendication 1, étant précisé que la première couche conductrice (2) et la seconde couche conductrice (5) se composent d'un matériau métallique ou d'un matériau en oxyde métallique.

9. Cellule solaire à colorant selon la revendication 8, étant précisé que le matériau métallique est constitué par du titane, du nickel et du tantale.

10. Cellule solaire à colorant selon la revendication 8, étant précisé que le matériau en oxyde métallique est constitué par un oxyde d'étain, un oxyde d'étain dopé au fluor, un oxyde de zinc, un oxyde d'indium ou un oxyde composé indium-étain.

11. Cellule solaire à colorant selon la revendication 1, étant précisé que la seconde couche conductrice (5) a plusieurs petits trous pour laisser passer l'électrolyte (7) ; ou le colorant et l'électrolyte.

12. Module de cellules solaires à colorant comprenant deux cellules solaires à colorant ou plus selon la revendication 1 qui sont reliées électriquement en série.
